# NOUVEAU FASCICULE DE BREVET EUROPEEN

(11) **EP 1 302 361 B2**
(45) Date de publication et mention de la décision concernant l'opposition: **01.05.2013**
(45) Mention de la délivrance du brevet: 28.06.2006
(21) Numéro de dépôt: 02292509.3
(22) Date de dépôt: 11.10.2002
(51) Int. Cl.: B60N 2/22

(54) **Siège de véhicule comportant un dossier rabattable vers l'avant**
Fahrzeugsitz mit vorklappbarer Rückenlehne
Vehicle seat with foreward tilting backrest

(30) Priorité: 15.10.2001 FR 0113258; 04.04.2002 FR 0204203
(43) Date de publication de la demande: 16.04.2003
(73) Titulaire: Faurecia Sièges d'automobile S.A., 92000 Nanterre (FR)
(72) Inventeur: Charras, Fabrice, 75014 Paris (FR); Pierrey, Jean-Francois, 92340 Bourg la Reine (FR); Thevenot, Gérald, 91730 Chamarande (FR); Reubeuze, Yann, 61100 Landigou (FR); Saint-Supery, Jean-Gabriel, 91780 Chalo Saint Mars (FR); Panet, David, 61100 St. Georges des Groseilliers (FR); Lardais, Emmanuel, 14380 Legast (FR); Lelaure, Xavier, 14220 Thury-Harcourt (FR); Legras, Cédric, 61100 La Lande Patry (FR)
(74) Mandataire: Cabinet Plasseraud

(56) Documents cités:
- EP-A2- 1 318 926
- EP-B1- 1 318 926
- DE-A- 2 507 092
- DE-A1- 4 423 631
- DE-A1- 19 510 618
- DE-A1- 19 715 764
- DE-T2- 69 700 609
- DE-T5- 2 507 092
- FR-A- 2 740 406
- FR-A- 2 746 064
- FR-A- 2 799 420
- FR-A1- 2 799 420
- US-U- 4 615 551
- US-U- 5 779 313

## Description

La présente invention est relative aux sièges de véhicule comportant un dossier rabattable vers l'avant.

Plus particulièrement, l'invention concerne un siège de véhicule comportant :
- une assise destinée à être reliée à un plancher de véhicule par des glissières,
- un dossier monté pivotant par rapport à l'assise autour d'un axe de pivotement unique horizontal, entre une position de mise en tablette dans laquelle le dossier s'étend sensiblement horizontalement parallèlement à l'assise et une position de confort, dans laquelle le dossier s'étend sensiblement verticalement et permet à un utilisateur de s'asseoir sur le siège, cette position de confort étant comprise dans une plage s'étendant angulairement entre une position relevée arrière et une position relevée avant du dossier,
- un mécanisme de commande de pivotement du dossier par rapport à l'assise, adapté pour assurer les trois fonctions consistant à
   - commander one articulation pour régler le dossier dans une position de confort,
   - commander un basculement du dossier, par rotation de celui-ci autour de l'axe de pivotement, vers la position de mise en tablette, et
   - commander un basculement du dossier, par rotation de celui-ci autour de l'axe de pivotement, dans une position rabattue intermédiaire entre l'une des positions de réglage de confort et la position de mise en tablette, ce mécanisme de commande comprenant l'articulation qui est actionnable entre un état déverrouillé permettant une rotation libre du dossier par rapport à l'assise autour de l'axe de pivotement et un état verrouillé dans lequel la rotation du dossier par rapport à l'assise est bloquée dans une position de confort.

Le document FR-A-2 746 064 décrit un exemple d'un tel siège, qui donne toute satisfaction au plan technique, mais qui présente toutefois l'inconvénient que les trois fonctions précitées sont commandées par un unique organe de commande qui doit être actionné dans un premier sens pour faire passer le dossier d'une position de confort à la position rabattue intermédiaire et dans un deuxième sens pour le réglage dans une position de confort et permettre de passer de la position d'utilisation à la position de mise en tablette. Le fait que ces trois fonctions soient commandables à partir d'un organe de commande unique, complique la tâche de l'utilisateur.

La présente invention a notamment pour but de pallier cet inconvénient. A cet effet, selon l'invention, le siège comporte en outre au moins deux organes de commande séparés l'un de l'autre et agissant sur le mécanisme de commande pour activer chacun, du moins l'une des trois fonctions précitées.

Grâce à ces dispositions, le siège reste simple car l'utilisateur actionne au moins deux organes de commande différents pour contrôler les différentes positions du dossier par rapport à l'assise. Chaque organe de commande active au plus deux des trois fonctions précitées, ce qui limite les risques de confusion par rapport au réglage qu'il souhaite effectuer, ainsi que les risques de dégradation des mécanismes d'articulation et de pivotement du dossier par rapport à l'assise, dans les cas où l'utilisateur ne parvenant pas à obtenir le mouvement du dossier qu'il attend, forcerait sur l'organe de commande unique.

Par ailleurs, le document DE 19882 413 divulgue un siège selon le préambule de la revendication 1.

L'invention vise à proposer un siège encore plus simple et plus facile à utiliser. Pour ce faire, le siège présente les caractéristiques mentionnées à la revendication 1.

Dans un premier mode de réalisation de l'invention, on peut éventuellement avoir recours en outre à l'une et/ou à l'autre des dispositions suivantes :
- il comprend un mécanisme de blocage comprenant lui même :
   - un organe rotatif, solidaire d'un premier élément de siège choisi parmi le dossier et l'assise, et
   - un organe de blocage, actionné par un organe de transmission et monté mobile sur un deuxième élément de siège, choisi parmi l'assise et le dossier, différent de celui duquel est solidaire l'organe rotatif, l'organe de blocage étant déplaçable entre, d'une part, une position active où il vient en contact avec une première butée de l'organe rotatif lorsque le dossier est en position rabattue intermédiaire en empêchant le dossier de pivoter vers sa position de mise en tablette et, d'autre part, une position escamotée dans laquelle il n'interfère plus avec la première butée, l'organe de blocage étant sollicité élastiquement vers sa position active ;
- l'organe de blocage est adapté pour venir en prise avec l'organe rotatif en immobilisant le dossier, par rapport à l'assise, lorsque le dossier est dans sa position de mise en tablette ;
- l'organe rotatif comporte une surface de came adaptée pour actionner un levier, lui-même adapté pour verrouiller ou déverrouiller les glissières, et qui est monté mobile sur le dossier entre une position active, dans laquelle le levier provoque un déverrouillage des glissières, et une position passive dans laquelle le levier permet un verrouillage des glissières ;
- le levier est sollicité élastiquement vers sa position passive et la surface de came est adaptée pour déplacer le levier dans sa position active lorsque le dossier est dans sa position rabattue intermédiaire ;
- le levier est apte à maintenir l'organe de blocage dans sa position active, lorsque le dossier est dans sa position rabattue intermédiaire ;
- l'organe de commande activant le basculement du dossier vers la position de mise en tablette et l'organe de commande activant le basculement du dossier dans la position rabattue intermédiaire sont séparés l'un de l'autre ;
- l'organe de commande activant le basculement du dossier vers la position rabattue intermédiaire, est monté sur un emplacement choisi parmi l'articulation et le haut du dossier ;
- l'un des organes de commande est apte à actionner un mécanisme de blocage situé de l'autre côté du siège par rapport à l'articulation.

Dans un deuxième mode de réalisation de l'invention, indépendant du premier, on peut éventuellement avoir recours en outre à l'une et/ou l'autre des dispositions suivantes :
- il comprend un mécanisme de blocage comprenant lui-même :
   - un organe rotatif, solidaire d'un premier élément de siège choisi parmi le dossier et l'assise, et
   - un organe de blocage, monté mobile sur un deuxième élément de siège, choisi parmi l'assise et le dossier, différent de celui duquel est solidaire l'organe rotatif, l'organe de blocage étant déplaçable entre, d'une part, une position active où il vient en contact avec une première butée de l'organe rotatif lorsque le dossier est en position rabattue intermédiaire en empêchant le dossier de pivoter vers sa position de mise en tablette et, d'autre part, une position escamotée dans laquelle il n'interfère plus avec la première butée, l'organe de blocage étant sollicité élastiquement vers sa position escamotée ;
- l'organe de blocage est adapté pour venir en prise avec l'organe rotatif en immobilisant le dossier, par rapport à l'assise, lorsque le dossier est dans sa position de mise en tablette ;
- l'organe rotatif comporte une surface de came adaptée pour actionner un levier, lui-même adapté pour verrouiller ou déverrouiller les glissières, et qui est monté mobile sur le dossier entre une position active, dans laquelle le levier provoque un déverrouillage des glissières, et une position passive dans laquelle le levier permet un verrouillage des glissières ;
- le levier est sollicité élastiquement vers sa position active et la surface de came est adaptée pour déplacer le levier dans sa position passive lorsque le dossier est dans une position de réglage de confort ou dans sa position de mise en tablette ;
- le levier est apte à maintenir l'organe de blocage dans sa position active, lorsque le dossier est dans sa position rabattue intermédiaire ;
- l'organe de commande activant le basculement du dossier vers la position de mise en tablette et l'organe de commande activant le basculement du dossier dans la position rabattue intermédiaire sont séparés l'un de l'autre ; et
- l'organe de commande activant le basculement du dossier vers la position rabattue intermédiaire, est monté sur un emplacement choisi parmi l'articulation et le haut du dossier.

Dans un troisième mode de réalisation de l'invention, indépendant des premier et deuxième modes, on peut éventuellement avoir recours en outre à l'une et/ou l'autre des dispositions suivantes :
- il comporte un mécanisme de blocage solidaire du dossier dans son pivotement autour de l'axe de pivotement ;
- il comporte un organe de blocage et un levier, tous deux montés pivotants sur le dossier, l'organe de blocage étant commandé par de l'organe de commande activant le basculement du dossier en position rabattue intermédiaire, entre une position escamotée, dans laquelle il n'interagit pas avec le levier, et une position active, dans laquelle il entraîne la rotation du levier avec le dossier, lorsque celui-ci pivote autour de l'axe de pivotement, d'une position de confort vers la position rabattue intermédiaire ;
- le levier, lorsqu'il est entraîné par l'organe de blocage dans le pivotement du dossier d'une position de confort vers la position rabattue intermédiaire, commande le déverrouillage des glissières ;
- le levier bloque la rotation du dossier en position rabattue intermédiaire, lorsqu'il pivote vers la position de mise en tablette, en prenant appui sur un élément solidaire de l'assise ;
- l'organe de commande activant le basculement du dossier vers la position de mise en tablette et l'organe de commande activant le basculement du dossier dans la position rabattue intermédiaire sont séparés l'un de l'autre ;
- l'organe de commande activant le basculement du dossier vers la position rabattue intermédiaire, est monté sur un emplacement choisi parmi l'articulation et le haut du dossier ;
- l'un des organes de commande est apte à actionner un mécanisme de blocage situé de l'autre côté du siège par rapport à l'articulation ; et
- l'organe de commande activant le basculement du dossier vers la position de mise en tablette et l'organe de commande contrôlant l'articulation sont confondus.

Dans un quatrième mode de réalisation de l'invention, indépendant des trois premiers, on peut éventuellement avoir recours en outre à l'une et/ou l'autre des dispositions suivantes :
- il comporte un mécanisme de blocage solidaire du dossier dans son pivotement autour de l'axe de pivotement ;
- il comporte un organe de blocage et un levier, tous deux montés pivotants sur le dossier, l'organe de blocage étant commandé par de l'organe de commande activant le basculement du dossier en position rabattue intermédiaire, entre une position escamotée, dans laquelle il n'interagit pas avec le levier, et une position active, dans laquelle il entraîne la rotation du levier avec le dossier, lorsque celui-ci pivote autour de l'axe de pivotement, d'une position de confort vers la position rabattue intermédiaire ;
- le levier, lorsqu'il est entraîné par l'organe de blocage dans le pivotement du dossier d'une position de confort vers la position rabattue intermédiaire, commande le déverrouillage des glissières ;
- le levier bloque la rotation du dossier en position rabattue intermédiaire, lorsqu'il pivote vers la position de mise en tablette, en prenant appui sur un élément solidaire de l'assise ;
- l'organe de commande activant le basculement du dossier vers la position de mise en tablette et l'organe de commande activant le basculement du dossier dans la position rabattue intermédiaire sont séparés l'un de l'autre ;
- l'organe de commande activant le basculement du dossier vers la position rabattue intermédiaire, est monté sur un emplacement choisi parmi l'articulation et le haut du dossier ; et
- l'organe de commande activant le basculement du dossier vers la position de mise en tablette et l'organe de commande contrôlant l'articulation sont confondus.

Dans un cinquième mode de réalisation de l'invention, indépendant des quatre premiers, on peut éventuellement avoir recours en outre à l'une et/ou l'autre des dispositions suivantes :
- il comporte un mécanisme de blocage solidaire du dossier dans son pivotement autour de l'axe de pivotement ;
- le mécanisme de blocage comporte un levier monté pivotant sur le dossier adapté pour commander le verrouillage et le déverrouillage des glissières ;
- le levier comporte des moyens de guidage adaptés pour que le levier soit entraîné, vers sa position active dans laquelle il provoque le déverrouillage des glissières, dans la rotation du dossier d'une position de confort vers la position rabattue intermédiaire et pour empêcher le déverrouillage des glissières lorsque que le dossier est en position de mise en tablette ;
- l'organe de commande activant le basculement du dossier vers la position de mise en tablette et l'organe de commande activant le basculement du dossier dans la position rabattue intermédiaire sont séparés l'un de l'autre ; et
- l'organe de commande activant le basculement du dossier vers la position rabattue intermédiaire, est monté sur un emplacement choisi parmi l'articulation et le haut du dossier.

D'autres aspects, buts et avantages de l'invention apparaîtront à la lecture de la description détaillée qui suit de trois modes de réalisation de l'invention. L'invention sera également mieux comprise à l'aide des références aux dessins sur lesquels :
- la figure 1 est une vue schématique de côté d'un siège selon un premier, un deuxième et un troisième modes de réalisation de l'invention, en position normale d'utilisation ;
- les figures 2 et 3 sont des vues similaires à la figure 1, respectivement avec le dossier du siège dans une position rabattue intermédiaire et dans une position rabattue en tablette ;
- la figure 4 est une vue en perspective de l'ossature du premier mode de réalisation du siège représenté en figures 1, 2 et 3 ;
- la figure 5 est une vue du mécanisme de blocage du premier mode de réalisation du siège selon l'invention, dans la position du dossier du siège représenté en figure 1 ;
- la figure 6 est une vue analogue à la figure 5, dans la position du dossier du siège représenté en figure 2 ;
- la figure 7 est une vue analogue aux figures 5 et 6, dans une position du dossier correspondant au début du passage vers une mise en tablette comme le siège représenté en figure 3 ;
- la figure 8 est une vue analogue aux figures 5 à 7, dans la position du dossier correspondant à la mise en tablette complète, représentée en figure 3 ;
- la figure 9 est une vue schématique en perspective de l'ossature d'un deuxième mode de réalisation du siège selon l'invention ;
- les figures 10a et 10b sont deux vues de côté correspondant respectivement à chacune des faces du mécanisme de blocage du deuxième mode de réalisation du siège selon l'invention, dans la position du dossier du siège représenté en figure 1 ;
- les figures 11a et 11b sont deux vues de côté correspondant respectivement à chacune des faces du mécanisme de blocage du mode de réalisation du siège correspondant aux figures 10a et 10b, dans la position du dossier du siège représenté en figure 2 ;
- les figures 12a et 12b sont deux vues de côté correspondant respectivement à chacune des faces du mécanisme de blocage du mode de réalisation du siège correspondant aux figures 10a, 10b, 11a et 11b, dans la position du dossier correspondant à la mise en tablette complète, représentée en figure 3 ;
- la figure 13 est une vue schématique en perspective de l'ossature d'un troisième mode de réalisation du siège selon l'invention ;
- la figure 14 représente schématiquement en vue éclatée le mécanisme de blocage du mode de réalisation du siège selon l'invention représenté sur la figure 13 ;
- la figure 15 représente, en vue de côté, le mécanisme de blocage du troisième mode de réalisation du siège selon l'invention représenté sur la figure 14, dans la position du dossier représenté en figure 1 ;
- la figure 16 représente, en vue de côté, le mécanisme de blocage du troisième mode de réalisation du siège selon l'invention, dans la position du dossier représenté en figure 2 ;
- la figure 17 représente, en vue de côté, le mécanisme de blocage du troisième mode de réalisation du siège selon l'invention, dans la position du dossier représenté en figure 3 ;
- la figure 18 est une vue schématique en perspective de l'ossature d'un quatrième mode de réalisation du siège selon l'invention ;
- la figure 19 représente schématiquement en perspective le mécanisme de blocage du mode de réalisation du siège selon l'invention représenté sur la figure 18 ;
- la figure 20 est une vue schématique en perspective de l'ossature d'un cinquième mode de réalisation du siège selon l'invention ;
- la figure 21 représente schématiquement en vue éclatée le mécanisme de blocage du mode de réalisation du siège selon l'invention représentée sur la figure 20 ;
- la figure 22 représente, en vue de face, le mécanisme de blocage du cinquième mode de réalisation ;
- les figures 23 et 24 représentent schématiquement en coupe le mécanisme de blocage représenté sur la figure 22 ;
- les figures 25, 26 et 27 représentent schématiquement de manière analogue à la représentation des figures 23 et 24, mais de manière simplifiée, les mouvements des pièces principales du mécanisme de blocage des figures 22 à 24, au cours du réglage de la position confort ;
- les figures 28, 29 et 30 représentent, selon des vues schématiques analogues à celles des figures 25 à 27, le mouvement des principales pièces du mécanisme de blocage des figures 22 à 27, au cours du basculement du dossier en position rabattue intermédiaire ; et
- les figures 31, 32 et 33 représentent, selon une vue analogue à celle des figures 25 à 30, le mouvement des principales pièces du mécanisme de blocage des figures 22 à 30, au cours du basculement du dossier 2 en position de mise en tablette.

Sur les différentes figures, les mêmes références désignent des éléments identiques ou similaires.

Cinq modes de réalisation du siège selon l'invention sont décrits ci-dessous. Ces cinq modes de réalisation peuvent être mis en oeuvre indépendamment l'un de l'autre.

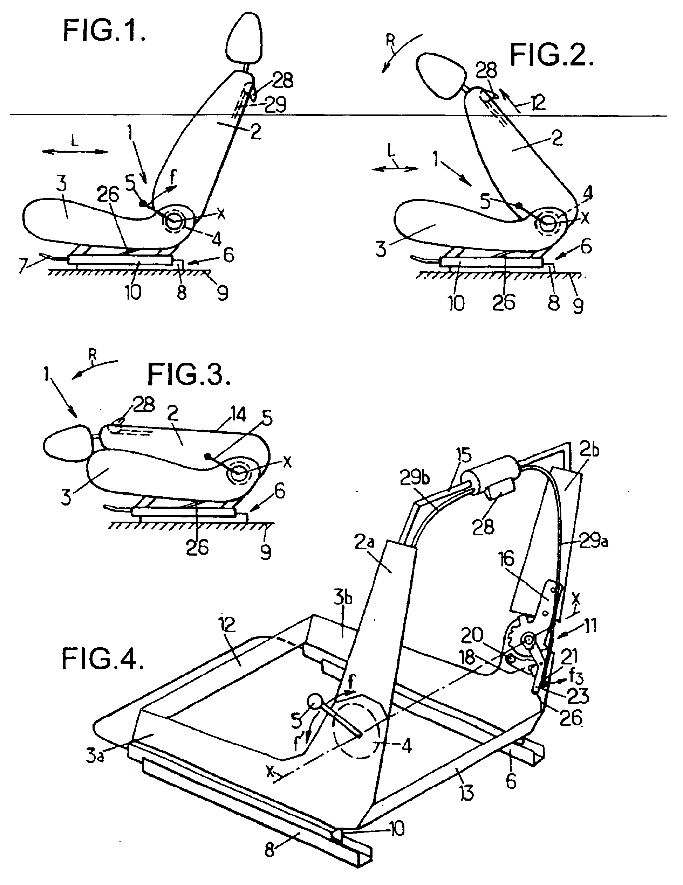

Les figures 1 à 3 correspondent pour l'essentiel à des caractéristiques communes aux cinq modes de réalisation décrits ci-dessous.

La figure 1 représente un siège de véhicule 1, notamment de siège avant destiné à équiper un véhicule qui comporte uniquement deux portes latérales.

Ce siège 1 comporte un dossier 2 qui est monté pivotant sur une assise 3 autour d'un axe de pivotement, ou de rabattement, X horizontal, pour régler l'inclinaison du dossier en position d'utilisation aussi appelée position de confort. Le réglage angulaire de la position relevée d'utilisation du dossier s'effectue selon une plage de positions relevées d'utilisation comprise entre une position relevée arrière et une position relevée avant du dossier 2. Ce réglage peut être réalisé par un utilisateur au moyen d'une articulation 4 connue en soi, commandée par un premier organe de commande, par exemple une poignée 5 rotative, comme dans les modes de réalisation présentés ici, ou autre. Des exemples de telles articulations sont donnés, par exemple, dans le document FR-A-2 740 406.

L'articulation 4 est adaptée pour permettre une rotation du dossier 2 par rapport à l'assise 3, autour de l'axe de pivotement X, selon une course angulaire comportant une partie crantée sur laquelle l'utilisateur peut bloquer le dossier 2 par rapport à l'assise 3 dans une position de confort, et une partie libre sur laquelle la rotation du dossier 2 par rapport à l'assise 3 est débloquée.

L'assise 3 est portée par deux glissières parallèles 6, dont une seule est visible sur la figure 1, qui sont normalement verrouillées de façon à immobiliser le siège 1, mais peuvent être déverrouillées au moyen d'un palonnier 7 ou d'un autre organe de manoeuvre (tel que celui représenté sur les figures 4 à 21), pour permettre un coulissement de l'ensemble du siège 1 vers l'avant ou vers l'arrière dans une direction longitudinale L. Chacune des glissières 6 comporte habituellement un profilé fixe 8 qui est solidaire du plancher 9 du véhicule et un profilé mobile 10 qui coulisse par rapport au profilé fixe 8 et qui est solidaire de l'assise 3 du siège 1.

Pour régler la position du dossier 1, dans la configuration qui lui est la plus confortable, l'utilisateur actionne la poignée 5, vers le haut, dans le sens de la flèche f. Ainsi, la poignée 5 commande l'articulation 4 pour la débrayer. L'utilisateur peut alors incliner plus ou moins le dossier 2 vers l'arrière ou vers l'avant, entre la position relevée arrière et la position relevée avant du dossier 2, selon une course angulaire correspondant à la partie crantée de l'articulation 4. Lorsque le dossier 2 est incliné dans une position qui lui convient, l'utilisateur relâche la poignée 5, qui revient élastiquement vers sa position initiale. L'articulation 4 est alors à nouveau verrouillée et le basculement du dossier 2 par rapport à l'assise 3 est à nouveau bloqué.

Il est également possible de rabattre le dossier 2 du siège en position de mise en tablette en le faisant pivoter encore plus vers l'avant dans le sens de la flèche R, comme représenté en figure 3. Dans cette position, le dossier 2 s'étend sensiblement parallèlement à l'assise 3, la face arrière du dossier étant de préférence suffisamment rigide pour servir de surface d'appui et constituer ainsi une tablette.

Le premier mode de réalisation du siège selon l'invention est décrit ci-dessous en relation avec les figures 4 à 8.

Le basculement du dossier 2 par rapport à l'assise 3 est contrôlé par un mécanisme comprenant l'articulation 4 située d'un côté du siège 1 et un mécanisme de blocage 11, situé du côté du siège 1 opposé à celui sur lequel est montée l'articulation 4.

L'organe de commande permettant d'activer la fonction de réglage de confort et l'organe de commande permettant d'activer la fonction de basculement du dossier 2 dans une position rabattue intermédiaire, sont confondus et correspondent à la poignée 5, tandis que l'organe de commande permettant d'activer la fonction de basculement du dossier 2 dans la position de mise en tablette est séparé et distinct du précédent et correspond à une manette 28.

Comme représentée sur la figure 4, l'armature métallique principale de l'assise 3 comporte deux premiers flasques latéraux 3a, 3b reliés entre eux par des traverses avant 12 et arrière 13. Les premiers flasques latéraux 3a, 3b reposent sur les glissières 6. La rotation des premiers flasques latéraux 3a, 3b par rapport aux seconds flasques latéraux 2a, 2b est contrôlée par l'articulation 4 et le mécanisme de blocage 11. L'articulation 4 et le mécanisme de blocage 11 sont montés respectivement entre les premiers 3a, 3b et seconds 2a, 2b flasques latéraux coaxialement par rapport à l'axe de pivotement X horizontal. Par ailleurs, une traverse 15 relie entre eux les seconds flasques latéraux 2a, 2b, et permet à ces deux flasques de pivoter simultanément. En effet, il n'existe pas d'arbre de liaison entre l'articulation 4 et le mécanisme de blocage 11.

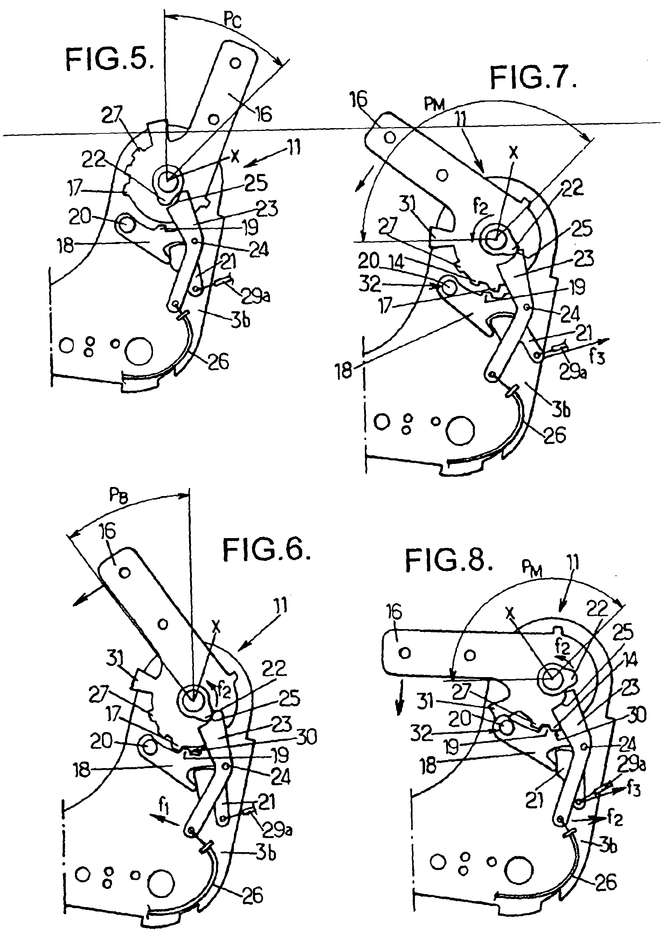

Le mécanisme de blocage 11 de ce mode de réalisation est illustré en détails sur les figures 5, 6, 7, 8 correspondant à diverses positions du dossier 2 par rapport à l'assise 3.

Ainsi, la figure 5 montre le mécanisme de blocage 11 dans la position du dossier 2 représentée en figure 1 (dans sa plage de positions relevées, en position de confort arrière).

Le mécanisme de blocage 11 comporte, d'une part, un organe rotatif 16 destiné à être rendu solidaire du flasque latéral 2a, par exemple, par sertissage ou par soudage, et d'autre part, un organe de blocage 18 monté mobile sur le flasque 3b de l'assise 3, autour d'un point d'articulation 20.

L'organe rotatif 16 est pourvu d'une première butée 17. Dans la position illustrée en figure 5, l'organe de blocage 18 n'interfère pas avec la première butée 17 de l'organe rotatif 16. En effet, cette première butée 17 se trouve décalée angulairement par rapport à une contre-butée 19 en saillie sur l'organe de blocage 18, et cette dernière ne vient en contact avec la première butée 17, que lorsque l'organe rotatif 16 a pivoté autour de l'axe de pivotement X, comme cela est représenté en figure 6 par exemple, correspondant alors à une position active de l'organe de blocage 18.

Dans la configuration correspondant à la figure 5, le mécanisme de blocage 11 est débrayé et permet la libre rotation de l'organe rotatif 16 par rapport au flasque 3b de l'assise 3 sur une plage de réglage confort P_{C}. Un utilisateur peut, sur cette plage, régler la position de confort du dossier 2 grâce à l'articulation 4 se trouvant de l'autre côté du siège 1. La plage de réglage confort P_{C} s'étend entre la position relevée arrière et la position relevée avant.

En référence avec la figure 6, le dossier 2 a dépassé la position relevée avant pour venir en position rabattue intermédiaire adaptée pour permettre à un utilisateur un accès aux places arrière, notamment pour s'installer sur la banquette arrière ou quitter cette banquette.

Pour atteindre cette position rabattue intermédiaire, l'utilisateur actionne la poignée 5 de l'articulation 4, selon le sens de la flèche f', vers le bas (voir figure 1), de manière à positionner celle-ci dans un secteur angulaire correspondant à une position déverrouillée de l'articulation 4 et bascule le dossier 2 autour de l'axe de pivotement X, dans une plage de basculement P_{B} vers l'avant, dans le sens de la flèche R, comme cela est représenté en figure 2, jusqu'à atteindre une position rabattue intermédiaire qui dépasse la plage de positions relevées d'utilisation.

Le mouvement de rotation du dossier 2 autour de l'axe de pivotement X se poursuit jusqu'à atteindre la position rabattue intermédiaire figée du fait du contact entre la première butée 17 et la contre butée 19. Ce basculement est transmis à l'organe rotatif 16.

L'organe rotatif 16 comporte en outre une surface de came 22 adaptée pour actionner un levier 23 monté mobile sur le premier flasque latéral 3b de l'armature métallique de l'assise 3 autour d'un point d'articulation 24. Ce levier 23 comporte à l'une de ses extrémités un suiveur de came 25, et à son autre extrémité, un câble 26 relié au palonnier 7 de commande des glissières 6.

Dans la position rabattue intermédiaire du dossier 2, il est nécessaire que les glissières 6 soient déverrouillées pour que le siège 1 puisse être translaté selon la direction L représentée en figures 1 ou 2. A cette fin, comme représenté en figure 6, le levier 23 est dans une position active dans laquelle le suiveur de came 25 est au contact de la surface de came 22 et provoque le déverrouillage des glissières 6 grâce à la traction exercée par le câble 26 (classiquement un câble de type "BOWDEN") sur le palonnier 7, le levier 23 pivotant autour de son point d'articulation 24 dans le sens de la flèche f1.

Selon le premier mode de réalisation, pour parvenir dans la position de mise en tablette à partir de la position relevée d'utilisation représentée en figure 1, ou à partir de la position partiellement rabattue permettant l'accès aux places arrières, comme représenté en figure 2, l'utilisateur doit actionner un deuxième organe de commande, par exemple une manette 28, distincte et séparée de la poignée 5, et disposée par exemple sur le haut du dossier 2, c'est-à-dire au niveau de la moitié supérieure de ce dossier 2, comme représenté sur les figures 1 à 3, ou plus précisément encore sur la partie haute de la face arrière du dossier 2, comme représenté sur la figure 4.

La manette 28 est reliée par l'intermédiaire d'organes de liaison 29a et 29b, typiquement des câbles de type "Bowden", reliés respectivement à un organe de transmission 21 et à l'articulation 4.

La figure 7 représente le mécanisme de blocage 11 dans une position correspondant au début du mouvement de rotation de l'organe rotatif 16, d'une position relevée, vers la position de mise en tablette. Pour parvenir dans cette position, il faut actionner la manette 28. Le câble 29a déplace alors l'organe de transmission 21 dans le sens de la flèche f3. Cet organe de transmission 21 permet à l'organe de blocage 18, qui se trouve en position escamotée, de ne plus interférer avec l'organe rotatif 16. La première butée 17 s'échappe de la contre butée 19, grâce au pivotement de l'organe de blocage 18 autour de son point d'articulation 20 de sorte que l'organe rotatif 16, qui est solidaire de l'armature du dossier 2, peut poursuivre son mouvement de rotation autour de l'axe de pivotement X jusqu'à atteindre la position complètement rabattue du dossier 2. Dans ce mouvement de rotation qui peut s'étendre sur une plage P_{M}, entre la position relevée arrière et la position de mise en tablette, le mécanisme de blocage 11 n'interfère pas avec l'articulation 4 : celle-ci demeure en position déverrouillée par l'action du câble 29b. Les dispositions qui permettent d'assurer à l'articulation 4 de demeurer en position déverrouillée sont décrites en détail par exemple dans le document FR-A-2 740 406.

La figure 8 représente le mécanisme de blocage 11 dans une position correspondant à la position de mise en tablette du dossier 2.

En position de mise en tablette, les glissières 6 sont verrouillées. En effet, du fait du pivotement de l'organe rotatif 16, la surface de came 22 pivote dans le sens de la flèche f2, libère le levier 23 et se place en position escamotée dans laquelle le suiveur de came 25 n'interfère plus avec la surface de came 22. Le levier 23 étant sollicité élastiquement vers sa position de repos, le câble 26 se détend en autorisant un verrouillage des glissières 6.

Dans la position de mise en tablette du dossier 2, celui-ci doit être verrouillé dans une position sensiblement horizontale et ne pas pouvoir être redressé vers une position relevée. A cette fin, l'organe rotatif 16 est pourvu d'une deuxième butée 27 coopérant avec la contre butée 19 et d'une troisième butée 14 apte à coopérer avec un cran 30 ménagé sur l'organe de blocage 18. Le cran 30 est situé en amont de la contre butée 19, par rapport au mouvement de basculement du dossier 2, de la position de mise en tablette vers la position relevée.

De même, lorsque le dossier 2 est en position de mise en tablette, il est préférable que ce dernier ne se rabatte pas au-delà d'une position sensiblement horizontale et qu'il soit apte à supporter, dans cette position de mise en tablette, un effort vers le bas, par exemple lorsqu'un poids important est posé sur sa face arrière. A cette fin, l'organe rotatif 16 dispose d'une quatrième butée 31, renforcée par rapport aux première 17 et deuxième 27 butées, qui est destinée à interférer avec un pion 32, situé en prolongement de l'axe de rotation matérialisé par le point d'articulation 20.

Pour ramener le dossier 2 du siège dans sa position normale d'utilisation, l'utilisateur actionne la manette 28 qui tire alors sur l'organe de liaison 29a, dans le sens de la flèche f3. Ce dernier actionne l'organe de transmission 21 de manière à permettre à la contre butée 19 de l'organe de blocage 18 de ne plus interférer avec la troisième butée 14, rendant ainsi possible le mouvement angulaire de l'organe rotatif 16 dans un sens permettant de ramener le dossier 2 dans sa position d'utilisation, comme représentée en figures 1 et 5. Ayant atteint cette position d'utilisation, l'articulation 4 se re-verrouille d'une manière conforme à l'enseignement du document FR-A-2 740 406 de façon à figer la position du dossier 2.

Selon une variante de ce premier mode de réalisation, l'organe de commande du réglage confort et l'organe de commande pour rabattre le dossier 2 dans une position intermédiaire, sont distincts. Dans ce cas, l'organe de commande pour rabattre le dossier 2 dans une position intermédiaire est placé par exemple sur le côté du dossier 2, dans la moitié supérieure de celui-ci, et est relié à l'articulation 4 par un câble (de manière analogue à ce qui est décrit en relation avec le mode de réalisation suivant).

Le deuxième mode de réalisation est décrit ci-dessous de manière plus détaillée en relation avec les figures 1 à 3 et 9 à 12.

Le siège 1 correspondant à ce deuxième mode de réalisation, comporte un dossier 2 monté pivotant sur une assise 3 autour d'un axe de pivotement X horizontal, ainsi qu'une articulation 4 commandée par un organe de commande, par exemple une poignée 5 rotative (voir figure 1).

L'assise 3 est portée par deux glissières 6 dont le déverrouillage peut s'effectuer au moyen d'un palonnier 7.

Le basculement du dossier 2 par rapport à l'assise 3 est contrôlé par un mécanisme comprenant une articulation 4 située d'un côté du siège 1 et un mécanisme de blocage 11, situé du côté du siège 1 opposé à celui sur lequel est montée l'articulation 4.

L'organe de commande permettant d'activer la fonction de réglage de confort, c'est-à-dire la poignée 5, l'organe de commande permettant d'activer la fonction de basculement du dossier dans une position rabattue intermédiaire, c'est-à-dire un levier 35, et l'organe de commande permettant d'activer la fonction de basculement du dossier 2 dans la position de mise en tablette, c'est-à-dire une manette 28, sont distincts et séparés.

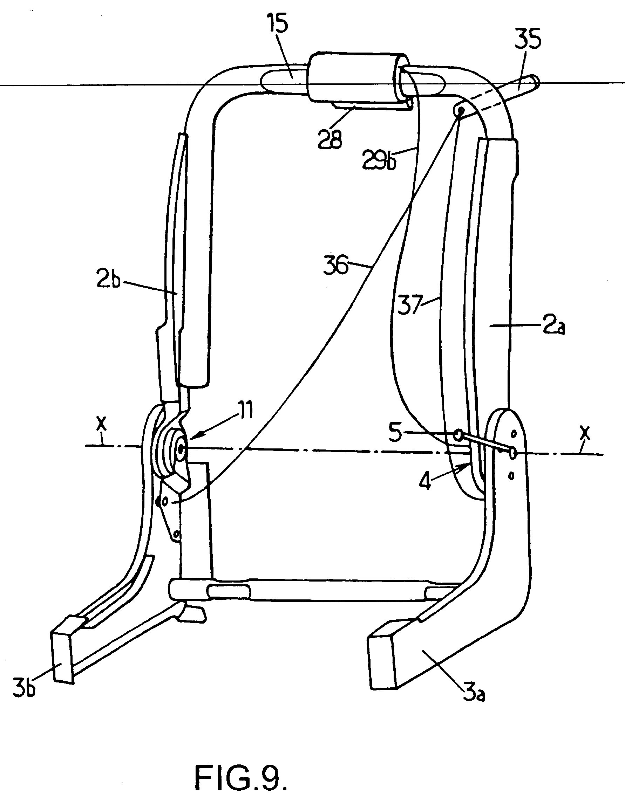

Comme représenté sur la figure 9, l'articulation 4 et le mécanisme de blocage 11 sont montés respectivement entre des premiers flasques latéraux 3a, 3b, de l'assise 3 et des seconds flasques latéraux 2a, 2b, du dossier 2, coaxialement par rapport à l'axe de pivotement X horizontal. Il n'existe pas d'arbre de liaison entre l'articulation 4 et le mécanisme de blocage 11. Mais une traverse 15 relie entre eux les seconds flasques latéraux 2a, 2b et permet à ces deux flasques de pivoter simultanément.

La traverse 15 porte la manette 28, destinée à être saillante en haut de la face arrière du dossier 2, et le levier 35 destiné à être saillant sur le même côté du dossier 2 que l'articulation 4 et la poignée 5.

La manette 28 est reliée à l'articulation 4 par un organe de liaison 29b (par exemple, un câble "Bowden"). Le levier 35 est relié au mécanisme de blocage 11 par un autre organe de liaison 36 (par exemple, un câble "Bowden") et à l'articulation 4 par encore un autre organe de liaison 37 (par exemple, un câble "Bowden").

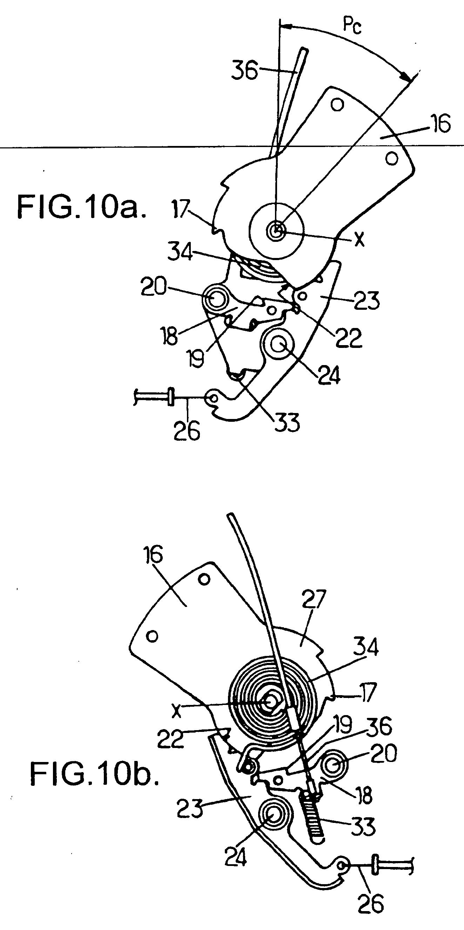

Le mécanisme de blocage 11 de ce mode de réalisation est illustré en détail sur les figures 10a, 10b, 11a, 11b, 12a et 12b correspondant à diverses positions du dossier 2 par rapport à l'assise 3.

Ainsi, les figures 10a et 10b montrent le mécanisme de blocage 11 dans la position du dossier 2 représentée sur la figure 1 (dans sa position de confort arrière).

Le mécanisme de blocage 11 comporte, d'une part, un organe rotatif 16 destiné à être rendu solidaire du flasque latéral 2b, par exemple par sertissage ou par soudage, et d'autre part, un organe de blocage 18 monté mobile sur le flasque 3b de l'assise 3, autour d'un point d'articulation 20.

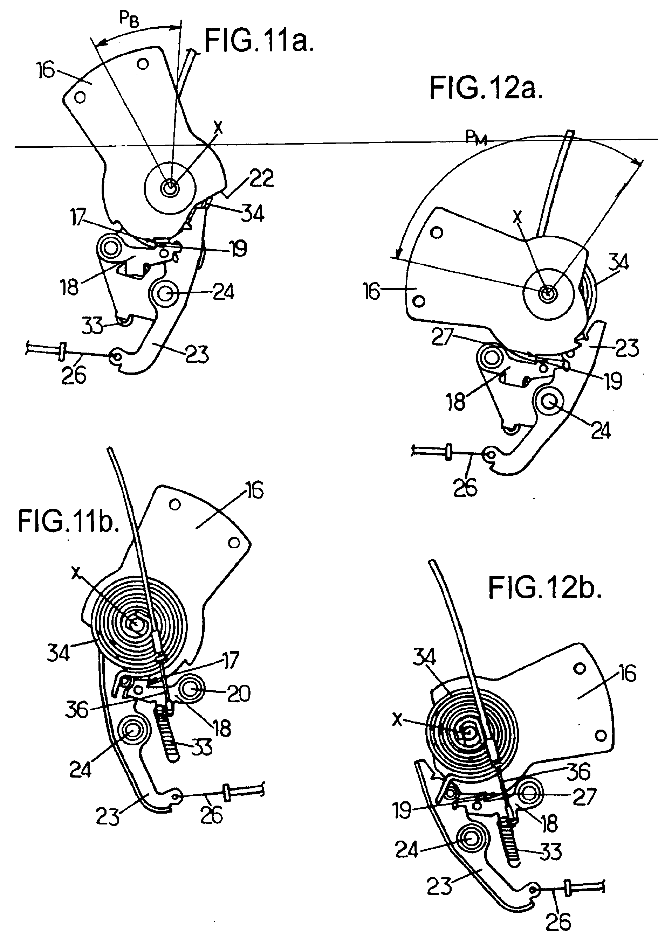

L'organe rotatif 16 est pourvu d'une première butée 17. Dans la position illustrée par les figures 10a et 10b, l'organe de blocage 18 n'interfère pas avec la première butée 17 de l'organe rotatif 16. En effet, cette première butée 17 se trouve décalée angulairement par rapport à une contre butée 19 en saillie sur l'organe de blocage 18. La contre butée 19 ne vient en contact avec la première butée 17 que lorsque l'organe rotatif 16 a pivoté autour de l'axe de pivotement X, comme cela est représenté sur les figures 11a et 11b, par exemple, qui correspondent à une position active de l'organe de blocage 18 et à la position rabattue intermédiaire du dossier 2.

Dans la configuration correspondant aux figures 10a et 10b, l'organe de blocage 18 est en position escamotée, position dans laquelle il est sollicité élastiquement par un ressort 33.

L'organe rotatif 16 comporte une surface de came 22 adaptée pour actionner un levier 23. Ce levier 23 est monté pivotant autour d'un axe 24 situé entre une première extrémité coopérant avec la surface de came 22 et une deuxième extrémité reliée à un câble 26 actionnant le palonnier 7. Comme représenté sur la figure 10b, un ressort 34 sollicite élastiquement le levier 23 vers une position active. Mais dans la position correspondant aux figures 10a et 10b, c'est-à-dire dans une position de réglage de confort, la surface de came 22 est adaptée pour maintenir le levier 23 dans une position passive dans laquelle il ne sollicite pas le câble 26.

L'organe de blocage 18 est sollicité élastiquement par le ressort 33 vers une position dans laquelle il maintient le levier 23 dans sa position passive.

Dans cette configuration, le mécanisme de blocage 11 est débrayé et permet la libre rotation de l'organe rotatif 16 par rapport au flasque 3b de l'assise 3 sur la totalité de la plage du réglage de confort P_{C}, sur laquelle seule l'articulation 4 contrôle la position du dossier 2 par rapport à l'assise 3.

Les figures 11a et 11b représentent le mécanisme de blocage 11 dans une configuration correspondant à la position rabattue intermédiaire permettant un accès aux places arrière. Pour amener le dossier 2 dans la position correspondante, l'utilisateur a, grâce au levier 35 et aux organes de liaison 36 et 37, d'une part, déverrouillé d'un côté l'articulation 4 et, d'autre part, sollicité l'organe de blocage 18 vers le haut, c'est-à-dire en imposant une force contraire à l'action du ressort 33. Le déverrouillage de l'articulation 4 permet à l'utilisateur de basculer le dossier 2 dans le sens de la flèche R (voir figure 2). L'actionnement de l'organe de blocage 18 libère celui-ci du levier 23, autorisant ce dernier à suivre la surface de came 22. La surface de came 22 est adaptée pour que le levier 23, sous l'action du ressort 34, pivote autour du point d'articulation 24 et tire sur le câble 26 qui déverrouille ainsi les glissières 6.

Dans cette configuration correspondant à la position rabattue intermédiaire du dossier 2, l'organe de blocage 18 est maintenu dans sa position active correspondant à une traction du câble 26, par le levier 23.

La première butée 17 de l'organe rotatif 16 vient au contact de la contre butée 19 de l'organe de blocage 18, empêchant ainsi le dossier 2 de pivoter vers sa position de mise en tablette.

Le retour du dossier 2 par l'utilisateur vers une position d'utilisation entraîne le déplacement du levier 23, contre l'action du ressort 34, le long de la surface de came 22, ramenant ainsi le levier 23 dans sa position passive dans laquelle il verrouille les glissières 6.

L'organe de blocage 18, sous l'action du ressort 33, revient alors vers la position qu'il occupait dans la configuration correspondant aux figures 10a et 10b, pour maintenir le levier 23 en position passive.

Les figures 12a et 12b correspondent à une position du dossier 2 mis en tablette. Pour parvenir dans cette position, l'utilisateur redresse le dossier 2 en position de confort, comme indiqué au paragraphe précédent, puis actionne la manette 28 qui est reliée par l'organe de liaison 29b à l'articulation 4 pour déverrouiller cette dernière et bascule le dossier 2 dans le sens de la flèche R (voir figure 3) jusqu'à ce qu'une deuxième butée 27 de l'organe rotatif 16 entre en contact avec la contre butée 19 de l'organe de blocage 18. Pendant cette opération, le levier 23 est resté bloqué, par l'organe de blocage 18, dans sa position passive dans laquelle le câble 26 n'est pas tiré et par conséquent les glissières 6 restent verrouillées.

Le dossier 2 est maintenu dans sa position de mise en tablette d'une part par l'action du ressort 34 qui s'oppose à un mouvement du dossier 2 vers une position redressée et, d'autre part, par la coopération de la deuxième butée 27 et de la contre butée 19 empêchant la rotation du dossier 2, vers l'assise 3, au-delà de la position de mise en tablette.

Selon une variante de ce mode de réalisation, l'organe de commande du réglage de confort et l'organe de commande pour rabattre le dossier 2 dans une position intermédiaire sont confondus. Dans ce cas, il s'agit par exemple d'une poignée 5 unique, comme pour le premier mode de réalisation, qui peut être actionnée dans un sens, pour le réglage de confort, et dans un autre, pour déverrouiller l'articulation 4 et permettre un basculement du dossier 2 pour un accès aux places arrières.

Le troisième mode de réalisation est décrit de manière plus détaillée ci-dessous en relation avec les figures 1 à 3 et 13 à 17.

Le siège 1 correspondant à ce troisième mode de réalisation, comporte un dossier 2 monté pivotant sur une assise 3 autour d'un axe de pivotement X horizontal, ainsi qu'une articulation 4 commandée par un organe de commande, par exemple une poignée 5 rotative (voir figure 1).

L'assise 3 est portée par deux glissières 6 dont le déverrouillage peut s'effectuer au moyen d'un palonnier 7.

Le basculement du dossier 2, par rapport à l'assise 3, est contrôlé par un mécanisme comprenant une articulation 4 située d'un côté du siège 1 et un mécanisme de blocage 11 situé du côté du siège 1 opposé à celui sur lequel est montée l'articulation 4.

L'organe de commande permettant d'activer la fonction de réglage de confort et l'organe de commande permettant d'activer la fonction de basculement du dossier 2 dans la position de mise en tablette sont confondus et correspondent à la poignée 5, mais ils sont distincts de l'organe de commande permettant d'activer la fonction de basculement du dossier 2 dans une position rabattue intermédiaire, correspondant à un levier 35.

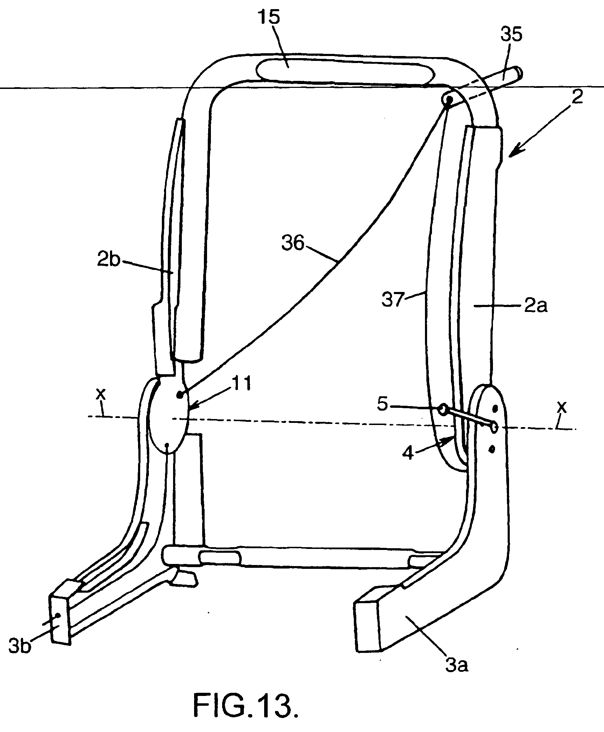

Comme représenté sur la figure 13, l'articulation 4 et le mécanisme de blocage 11 contrôlent la rotation de premiers 3a, 3b flasques latéraux, de l'assise 3, par rapport à des seconds 2a, 2b flasques latéraux, du dossier 2.

Il n'existe pas d'arbre de liaison entre l'articulation 4 et le mécanisme de blocage 11. Mais une traverse 15 relie entre eux les seconds flasques latéraux 2a, 2b et permet à ces deux flasques de pivoter simultanément.

La traverse 15 porte le levier 35, destiné à être saillant sur le même côté du dossier 2 que l'articulation 4 et la poignée 5. Le levier 35 est relié au mécanisme de blocage 11 par un organe de liaison 36 (par exemple, un câble "Bowden") et à l'articulation 4 par un autre organe de liaison 37 (par exemple, un câble "Bowden").

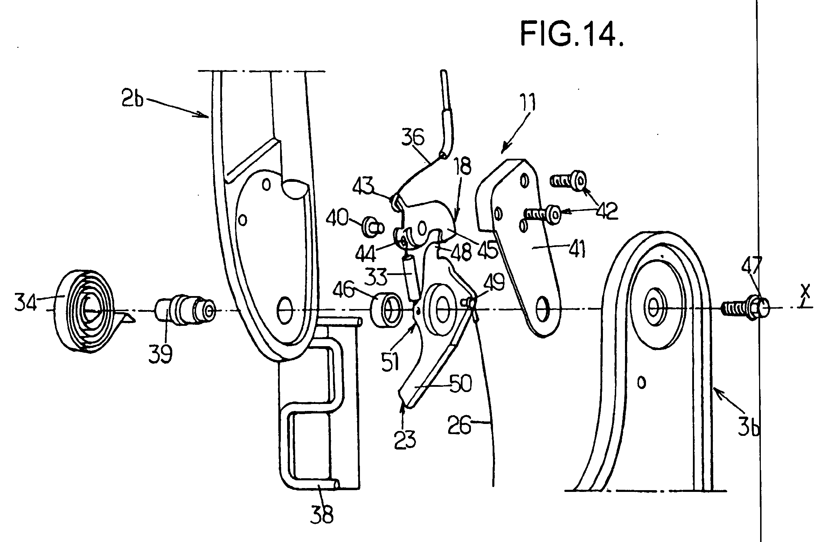

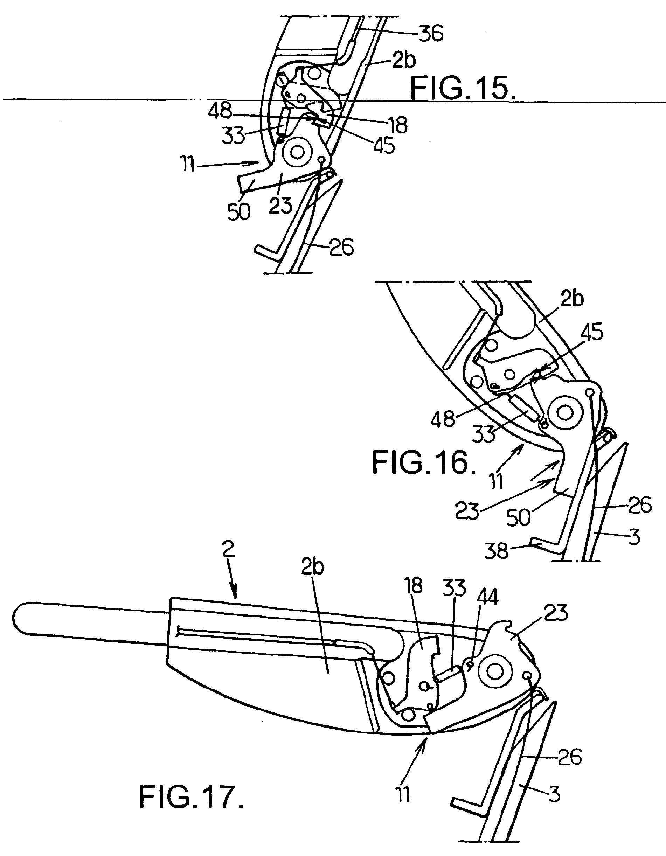

Le mécanisme de blocage 11 de ce mode de réalisation est illustré en détail sur la figure 14, ainsi que sur les figures 15, 16 et 17 correspondant à diverses positions du dossier 2 par rapport à l'assise 3.

Ce mécanisme de blocage 11 comporte un organe de blocage 18 et un levier 23. L'organe de blocage 18 et le levier 23 sont tous deux montés pivotants sur le second flasque latéral 2b, situé de l'autre côté du siège 1 par rapport à l'articulation 4.

Le dossier 2 est articulé sur l'assise 3, autour d'un axe de pivotement X horizontal. Un ressort de torsion 34 rappelle élastiquement le dossier 2 vers la position rabattue intermédiaire et la position de mise en tablette. Le ressort 34 comporte une extrémité externe en appui sur une butée 38 solidaire du premier flasque 3b de l'assise 3. L'extrémité interne du ressort 34 coopère avec un pivot 39 rendant solidaire en rotation le ressort 34 et le dossier 2.

L'organe de blocage 18 est fixé, grâce à une vis 40 sur une plaque 41, elle-même maintenue sur le flasque 2b grâce à des vis 42. L'organe de blocage 18 est apte à pivoter autour d'un axe horizontal matérialisé par la vis 40. L'organe de blocage 18 est mobile en rotation autour de la vis 40, entre une position escamotée dans laquelle il n'interagit pas avec le levier 23, et une position active, dans laquelle il entraîne la rotation du levier 23 avec le dossier 2, lorsque celui-ci pivote autour de l'axe de pivotement X, d'une position de confort vers la position rabattue intermédiaire. L'organe de blocage 18 comporte un point d'attache 43 de l'organe de liaison 36. Il comporte également à proximité de ce point d'attache 43 un autre point d'attache 44 d'un ressort 33. Le ressort 33 rappelle l'organe de blocage 18 vers sa position escamotée.

Sensiblement symétriquement aux points d'attache 43, 44, par rapport à la vis 40, l'organe de blocage 18 comporte un crochet 45 destiné à coopérer avec le levier 23.

Le levier 23 est monté libre en rotation autour du pivot 39 grâce à une entretoise 46. Le levier 23 est maintenu sur le pivot 39, entre le second flasque latéral 2b et la plaque 41. Les premier 3b et second 2b flasques latéraux sont maintenus ensemble par une vis 47 vissée dans le pivot 39. Le pivot 39 traverse le second flasque latéral 2b, l'entretoise 46 et le levier 23.

Le levier 23 comporte un crochet 48 destiné à coopérer avec le crochet 45 de l'organe de blocage 18. Le levier 23 comporte également, à proximité du crochet 48, un point d'attache 49 de l'organe de liaison commandant le verrouillage et le déverrouillage des glissières 6. Avantageusement, cet organe de liaison est un câble 26 de type "Bowden". Sensiblement symétriquement au crochet 48 et au point d'attache 49 par rapport à l'articulation du levier 23 sur le pivot 39, le levier 23 comporte une branche 50 s'étendant sensiblement radialement perpendiculairement à l'axe de pivotement X. Sensiblement symétriquement au point d'attache 49, par rapport à l'axe de pivotement X du câble 26, le levier 23 comporte un point d'attache 51 pour le ressort 33. Ainsi, le ressort 33 rappelle l'organe de blocage 18 et le levier 23 de manière à ce que les crochets 45 et 48 ne coopèrent pas l'un avec l'autre, si aucune traction n'est exercée sur l'organe de liaison 36.

Comme représenté sur la figure 15, qui correspond à la position du dossier illustré par la figure 1, le ressort 33 rappelle l'organe de blocage 18 en position escamotée (représentée en pointillés sur la figure 15). Dans cette configuration, le mécanisme de blocage 11 est débrayé et permet la libre rotation du second flasque latéral 2b par rapport au premier flasque latéral 3b sur la totalité de la plage du réglage de confort, sur laquelle seule l'articulation 4 contrôle la position du dossier 2 par rapport à l'assise 3. Lorsqu'un utilisateur actionne le levier 35 pour faire basculer le dossier 2 en position rabattue intermédiaire, il déverrouille d'une part l'articulation 4 et d'autre part tire sur l'organe de liaison 36 qui fait basculer l'organe de blocage 18 en position active, contre l'action du ressort 33. Le déverrouillage de l'articulation 4 permet à l'utilisateur de basculer le dossier 2 dans le sens de la flèche R (voir figure 2). Le crochet 45 de l'organe de blocage 18 coopère alors avec le crochet 48 du levier 23. Ainsi, lorsque l'utilisateur bascule le dossier 2 en position rabattue intermédiaire, le levier 23 est entraîné en rotation avec le second flasque latéral 2b. Pour basculer le dossier 2, au-delà des positions de confort vers la position rabattue intermédiaire, l'utilisateur peut lâcher le levier 35, l'articulation 4 étant dans une portion de course libre en rotation.

Comme représenté sur la figure 16, en position rabattue intermédiaire, la branche 50 du levier 23 prend appui sur la butée 38 solidaire de l'assise 3. Dans cette position rabattue intermédiaire, le levier 23 tire également sur le câble 26, déverrouillant ainsi les glissières 6.

La branche 50, en appui sur la butée 38, empêche le dossier 2 de pivoter vers sa position de mise en tablette.

Lorsque le dossier 2 est en position rabattue intermédiaire et que l'utilisateur relâche le levier 35, le dossier 2 reste en position rabattue intermédiaire, grâce à l'action du ressort 34 qui rappelle le dossier 2 vers la position de mise en tablette. Dans la position rabattue intermédiaire, les crochets 45 et 48 continuent de coopérer ensemble même si le levier 35 est relâché.

Les glissières 6 étant déverrouillées, l'utilisateur peut avancer le siège 1 de manière à dégager l'espace suffisant pour permettre un accès vers les places situées derrière ce siège 1.

Pour ramener le dossier 2 dans la position d'utilisation, l'utilisateur relève le dossier 2 contre l'action du ressort 34. Le levier 23 revient dans le sens des aiguilles d'une montre avec le dossier 2, sous l'effet de rappel du câble 26. Lorsque le câble 26 est suffisamment détendu, le ressort 33 tend à dégager les crochets 45 et 48 l'un de l'autre. L'organe de blocage 18 peut alors remonter en position escamotée.

Pour faire basculer le dossier 2 d'une position de confort vers la position de mise en tablette, l'utilisateur actionne la poignée 5 pour déverrouiller l'articulation 4. Le levier 35 n'étant pas manoeuvré, l'organe de blocage 18 reste en position escamotée. Ainsi, lors du basculement du dossier 2 vers l'avant, d'une position d'utilisation vers la position de mise en tablette, le levier 23 n'est pas entraîné. Le levier 23 reste, par rapport à l'assise 3, dans sa position initiale, retenue dans cette position par la force de rappel exercée par le câble 26. La traction du levier 23 sur ce câble 26 correspond seulement à la force de rappel du ressort 33 qui reste très faible, voire nulle, du fait que l'organe de blocage demeure en position escamotée et que le mouvement de l'extrémité du ressort 33 relié au levier 23 correspond sensiblement à un arc de cercle de rayon constant autour du point d'attache 44 du ressort 33 sur l'organe de blocage 18.

Pour ramener le dossier 2 de sa position de mise en tablette à une position de confort, l'utilisateur manoeuvre à nouveau la poignée 5 pour déverrouiller l'articulation 4. Le dossier 2 peut alors être relevé en position d'utilisation, contre la force de rappel du ressort 34.

Le quatrième mode de réalisation est décrit de manière plus détaillée ci-dessous en relation avec les figures 1 à 3, 18 et 19.

Selon ce mode de réalisation, le siège 1 comporte un dossier 2 monté pivotant sur une assise 3 autour d'un axe de pivotement X horizontal (voir figure 1).

Selon ce mode de réalisation, l'assise 3 est portée par deux glissières 6 dont le déverrouillage peut s'effectuer au moyen d'un palonnier 7.

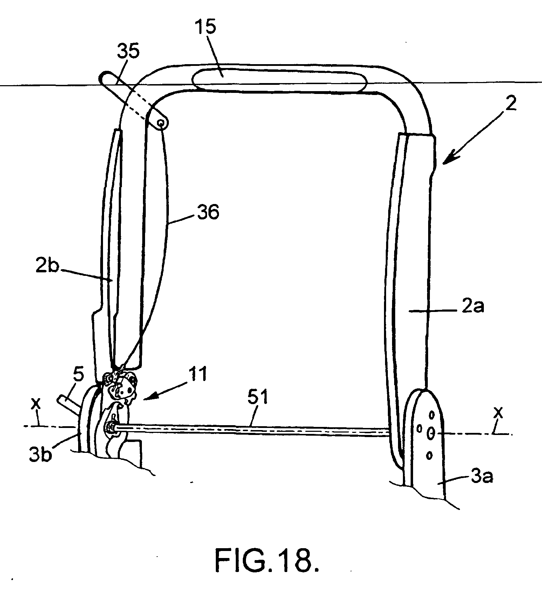

Comme représenté sur la figure 18, l'armature métallique principale de l'assise 3 comporte deux premiers flasques latéraux 3a, 3b reliés respectivement à des seconds flasques latéraux 2a, 2b constitutifs du dossier 2. Les premiers flasques latéraux 3a, 3b reposent sur les glissières 6.

Le basculement du dossier 2, par rapport à l'assise 3, est contrôlé par un mécanisme comprenant une articulation 4 et un mécanisme de blocage 11 situé du même côté du siège 1.

Selon ce mode de réalisation, l'organe de commande permettant d'activer la fonction de réglage de confort et l'organe de commande permettant d'activer la fonction de basculement du dossier 2 dans la position de mise en tablette, sont confondus et correspondent à une poignée 5. Mais ils sont distincts de l'organe de commande, correspondant à un levier 35, permettant d'activer la fonction de basculement du dossier 2 dans une position rabattue intermédiaire.

Les premiers 3a, 3b et seconds 2a, 2b flasques latéraux de l'assise 3 et du dossier 2 sont assemblés de manière rotative autour d'une barre de liaison 51 s'étendant longitudinalement parallèlement à l'axe de pivotement X.

Une traverse 15 relie entre eux les seconds flasques latéraux 2a, 2b. La traverse 15 porte le levier 35, destiné à être saillant sur le même côté du dossier 2 que l'articulation 4 et la poignée 5. Le levier 35 est relié au mécanisme de blocage 11 par un organe de liaison 36 (par exemple, un câble "Bowden").

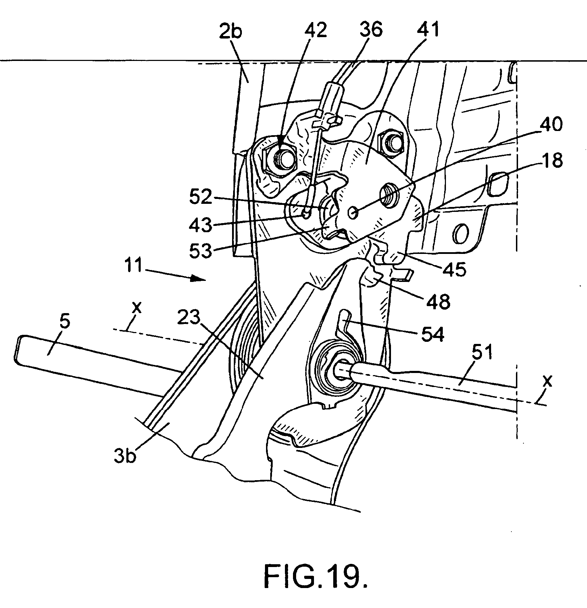

Le mécanisme de blocage 11 de ce mode de réalisation est illustré en détail sur la figure 19.

Ce mécanisme de blocage 11 comporte un organe de blocage 18 et un levier 23. L'organe de blocage 18 et le levier 23 sont tous deux montés pivotants sur le second flasque latéral 2b.

L'organe de blocage 18 est fixé, grâce à un pivot 40, sur une plaque 41, elle-même maintenue sur le flasque 2b grâce à une vis 42. L'organe de blocage 18 est mobile en rotation sur le pivot 40, autour d'un axe sensiblement parallèle à l'axe de pivotement X, entre une position escamotée dans laquelle il n'interagit pas avec le levier 23, et une position active, dans laquelle il entraîne la rotation du levier 23 avec le dossier 2, lorsque celui-ci pivote autour de l'axe de pivotement X, d'une position de confort vers la position rabattue intermédiaire. L'organe de blocage 18 est rappelé élastiquement vers sa position escamotée, par un ressort de torsion 52 prenant appui d'une part sur une patte 53 formée par une partie repliée de la plaque 41, et d'autre part sur un méplat d'une partie de l'organe de blocage 18 s'étendant coaxialement au pivot 40 et fixe par rapport au flasque 2b.

L'organe de blocage 18 comporte un point d'attache 43 de l'organe de liaison 36.

Sensiblement symétriquement au point d'attache 43, par rapport au pivot 40, l'organe de blocage 18 comporte un crochet 45 destiné à coopérer avec le levier 23.

Le levier 23 est monté libre en rotation autour de l'arbre de liaison 51 entre une position passive dans laquelle il autorise le verrouillage des glissières et une position active dans laquelle il actionne un organe de liaison (non représenté) qui commande le déverrouillage des glissières 6. Le levier 23 comporte un crochet 48 destiné à coopérer avec le crochet 45 de l'organe de blocage 18. Le levier 23 comporte également, à l'opposé du crochet 48 par rapport à l'arbre de liaison 51, des moyens d'attache de l'organe de liaison commandant le verrouillage et le déverrouillage des glissières 6. Un ressort de torsion 54 rappelle élastiquement le levier 23 vers sa position passive.

Sur la figure 19, le mécanisme de blocage 11 est représenté en configuration débrayée. Il permet la libre rotation du second flasque latéral 2b par rapport au premier flasque latéral 3b sur la totalité de la plage de réglage de confort et vers la position de mise en tablette, pour lesquels seule l'articulation 4 contrôle la position du dossier 2 par rapport à l'assise 3.

Lorsqu'un utilisateur actionne le levier 35, pour faire basculer le dossier 2 en position rabattue intermédiaire, il déverrouille d'une part l'articulation 4, par des moyens de liaison connus de l'homme du métier et non représentés, et d'autre part tire sur l'organe de liaison 36.

Lorsque l'organe de liaison 36 est tendu, l'organe de blocage 18 est déplacé en rotation autour du pivot 40, contre la force de rappel du ressort de torsion 52.

Le crochet 45 de l'organe de blocage 18 vient alors en vis-à-vis du crochet 48 du levier 23.

L'articulation 4 étant déverrouillée, il suffit à l'utilisateur de basculer le dossier 2 vers l'avant en position rabattue intermédiaire, pour avoir accès aux places arrière du véhicule. Dans ce mouvement de bascule, l'organe de blocage 18 est entraîné avec le flasque 2b. Les deux crochets 45 et 48 coopèrent alors ensemble, ce qui permet d'entraîner également le levier 23 en rotation autour de l'axe de pivotement X, contre l'effort de rappel du ressort de torsion 54. Dans sa rotation, le levier 23 tire sur l'organe de liaison commandant le déverrouillage des glissières 6. La rotation du dossier 2 est limitée par la venue du levier 23 en butée sur le flasque 3b.

Lorsque l'utilisateur ramène le dossier 2 vers l'arrière, le levier 23 est rappelé vers sa position passive correspondant à la figure 19. Lorsque le levier 23 est en position passive, il ne s'exerce plus de force entre les crochets 45 et 48. L'organe de blocage 18 peut alors revenir, grâce à la force de rappel du ressort de torsion 52, en position escamotée, si plus aucune force n'est exercée sur l'organe de liaison 36.

Le passage du dossier 2 en position de mise en tablette s'effectue en déverrouillant l'articulation 4, grâce à la poignée 5 et en basculant le dossier vers l'avant. Dans ce mouvement de bascule, si aucune action n'est exercée sur le levier 35, le mécanisme 11 reste passif et aucun déverrouillage des glissières n'intervient.

Le cinquième mode de réalisation est décrit ci-dessous en relation avec les figures 1 à 3 et 20 à 33.

Le siège 1 correspondant à ce mode de réalisation, comporte un dossier 2 monté pivotant sur une assise 3 autour d'un axe de pivotement X horizontal (voir figure 1).

L'assise 3 est portée par deux glissières 6 dont le déverrouillage peut s'effectuer au moyen d'un palonnier 7.

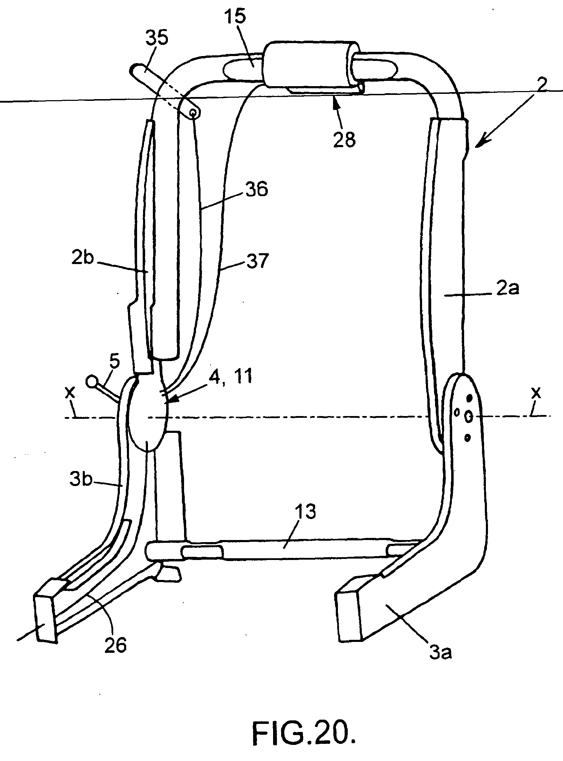

Comme représenté sur la figure 20, le basculement du dossier 2, par rapport à l'assise 3, est contrôlé par un mécanisme comprenant une articulation 4 et un mécanisme de blocage 11, tous deux situés du même côté du siège 1.

L'organe de commande permettant d'activer la fonction de réglage de confort, correspondant à une poignée 5, l'organe de commande permettant d'activer la fonction de basculement du dossier 2 dans la position de mise en tablette, correspondant à la manette 28, et l'organe de commande permettant d'activer la fonction de basculement du dossier 2 dans une position rabattue intermédiaire, correspondant au levier 35, sont distincts les uns des autres.

L'armature métallique principale de l'assise 3 comporte deux premiers flasques latéraux 3a, 3b reliés respectivement à des seconds flasques latéraux 2a, 2b constitutifs du dossier 2. Les premiers flasques latéraux 3a, 3b reposent sur les glissières 6. Il n'existe pas d'arbres de liaison correspondant à l'axe de pivotement X, mais une traverse 15 relie les seconds flasques latéraux 2a, 2b et permet à ces deux flasques de pivoter simultanément. Les deux premiers flasques latéraux 3a, 3b sont reliés entre eux par une traverse arrière 13.

La traverse 15 porte le levier 35, destiné à être saillant sur le même côté du dossier 2 que l'articulation 4 et la poignée 5. Le levier 35 est relié au mécanisme de blocage 11 par un organe de liaison 36 (par exemple, un câble "Bowden"). La traverse 15 porte également la manette 28, destinée à être saillante sur la face arrière du dossier 2. La manette 28 est reliée au mécanisme de blocage 11 par un organe de liaison 37 (par exemple, un câble "Bowden").

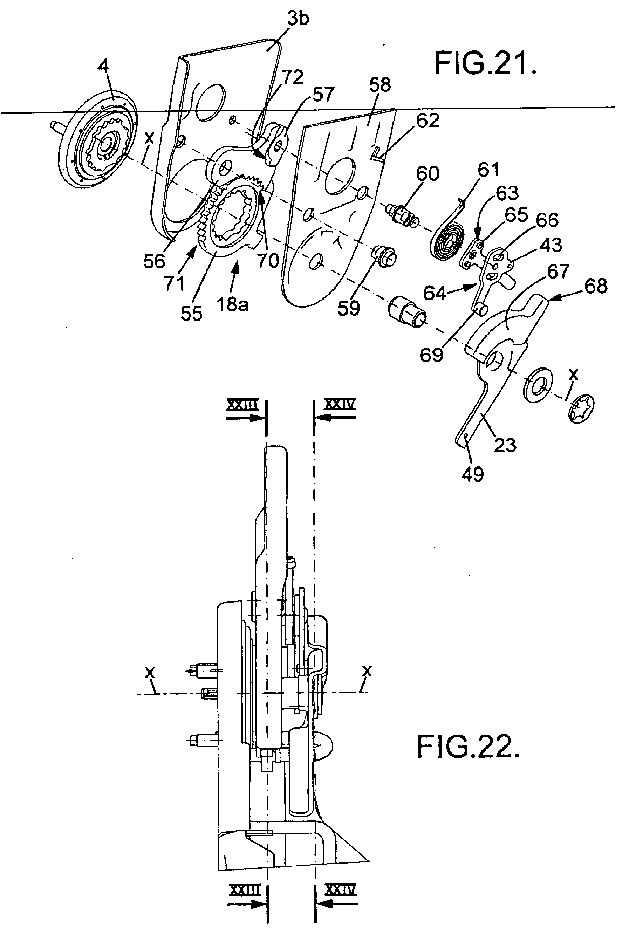

Le mécanisme de blocage 11 est illustré en détail sur la figure 21, ainsi que sur les figures 22 à 33 correspondant à diverses positions du dossier 2 par rapport à l'assise 3.

Ce mécanisme de blocage 11 comporte des moyens de blocage 18a et un levier 23. Les moyens de blocage 18a comprennent un disque denté 55, un crochet de verrouillage 56 et une came 57. Les moyens de blocage 18a sont enfermés dans un boîtier constitué par une partie du flasque latéral 2b et d'une plaque de fermeture 58.

Le crochet de verrouillage 56 pivote autour d'un axe sensiblement parallèle à l'axe de pivotement X et matérialisé par un pivot de crochet 59. La came 57 pivote autour d'un axe sensiblement parallèle à l'axe de pivotement X et matérialisé par un pivot de came 60. Le pivot de came 60 est sollicité élastiquement par un ressort de torsion 61.

Le ressort de torsion 61 est précontraint entre une extrémité interne coopérant avec un méplat formé sur le pivot de came 60 et une extrémité extérieure, en butée sur une patte 62 formée sur la plaque de fermeture 58.

Le pivot de came 60 est actionné par l'intermédiaire d'une biellette de commande de mise en tablette 63 et d'une biellette de commande d'accès aux places arrière 64. La biellette de commande de mise en tablette 63 et la biellette de commande d'accès aux places arrière 64 sont plaquées l'une sur l'autre et maintenues ensemble sur le pivot de came 60. La biellette de commande de mise en tablette 63 est solidaire en rotation du pivot de came 60. Elle comporte sur l'une de ses faces, celle en vis-à-vis de la biellette de commande d'accès aux places arrière 64, deux tétons 65. La biellette de commande d'accès aux places arrière 64 comporte deux découpes 66 s'étendant en arc de cercle centré sur l'axe de rotation du pivot de came 60. La biellette de commande d'accès aux places arrière 64 est positionnée, par rapport à la biellette de commande de mise en tablette 63, de manière à ce que les tétons 65 s'engagent dans les découpes 66.

La biellette de commande d'accès aux places arrière 64 est libre en rotation autour du pivot de came 60. Ainsi, sur la plage angulaire correspondant à l'arc de cercle des découpes 66, la biellette de commande de mise en tablette 63 peut être actionnée sans entraîner, dans son mouvement, la biellette de commande d'accès aux places arrière 64.

La biellette de commande d'accès aux places arrière 64 comporte également un pion d'embarquement 69. Ce pion d'embarquement 69 s'étend perpendiculairement à la plaque constitutive de la bielle de commande d'accès aux places arrière 64, c'est-à-dire parallèlement à l'axe de pivotement

### X.

La biellette de commande de mise en tablette 63 est reliée à la manette 28 par l'organe de liaison 37. La biellette de commande d'accès aux places arrière 64 est reliée au levier 35 par l'organe de liaison 36. La biellette de commande d'accès aux places arrière 64 est reliée à l'organe de liaison 36 au niveau d'un point d'attache 43.

Le disque denté 55 se présente sous une forme de couronne avec une surface interne crantée, destinée à coopérer avec l'articulation 4, de manière à rendre l'articulation 4 et le disque denté 55 solidaires en rotation. Le disque denté 55 comporte également une surface externe périphérique comportant deux zones de crantage munies de dents destinées à coopérer avec des dents homologues réalisées sur le crochet de verrouillage 56. Ces deux zones de crantage sont respectivement une zone de crantage de confort 70 et une zone de crantage de mise en tablette 71.

Le crochet de verrouillage 56 a un secteur destiné à coopérer avec la surface de came de la came 57.

Le levier 23 est constitué d'une tôle emboutie de manière à former un guide 67. Le guide 67 forme, lorsque le levier 23 est monté sur la plaque de fermeture 58, un tunnel s'étendant en arc de cercle autour de l'axe de pivotement X. L'une des extrémités de ce tunnel est évasée pour former une extension radiale constituant une butée 68. Le levier 23 est relié, au niveau d'un point d'attache 49, à un organe de liaison 26 commandant le verrouillage ou le déverrouillage des glissières 6.

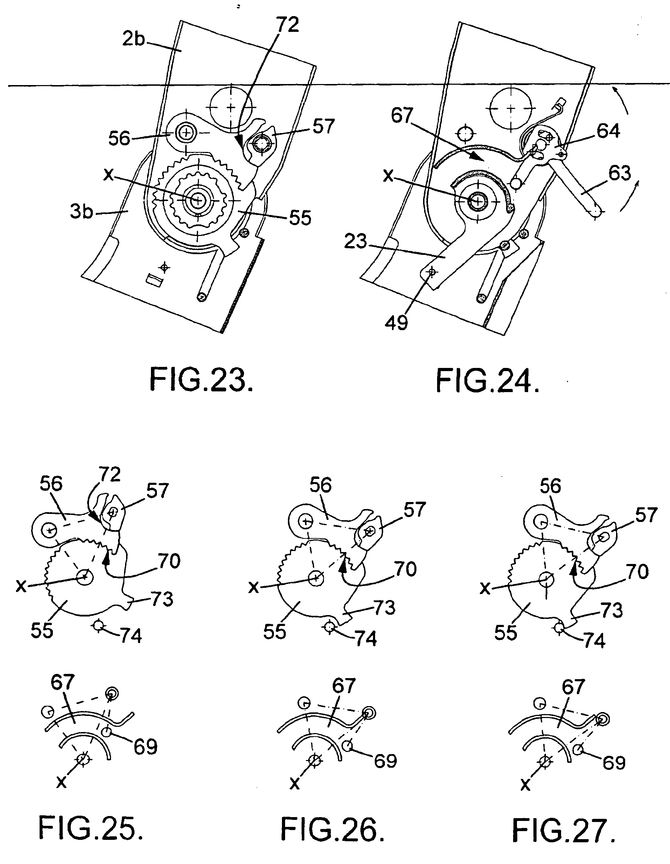

Le mécanisme de blocage 11, comme représenté sur la figure 22, une fois assemblé, peut se décomposer en un étage de contrôle du réglage confort et de la mise en tablette, plus particulièrement représenté sur la figure 23, ainsi qu'un étage de contrôle de l'accès aux places arrière, plus particulièrement représenté sur la figure 24.

Le réglage en position confort est illustré sur les figures 25 à 27. Pour le réglage en position de confort, ni le levier 35, ni la manette 28 ne sont actionnés. En conséquence, la came 57 reste fixe et coopère avec le secteur du crochet de verrouillage 56, de manière à maintenir celui-ci en engagement avec la zone de crantage de confort 70 du disque denté 55. Le disque denté 55, ainsi que l'ensemble du mécanisme de blocage 11, tournent alors solidairement autour de l'axe de pivotement X avec le flasque 2b et donc le dossier 2. Ce mouvement de rotation dans la plage de réglage de confort peut être effectué entre une position relevée avant, correspondant à la figure 25 et une position relevée arrière, correspondant à la figure 27, en passant par des positions intermédiaires du type de celles représentées sur la figure 26. Sur la totalité de cette plage de réglage de confort, le pion d'embarquement 69 se déplace librement dans le guide 67. Ainsi, la rotation du dossier 2 dans la plage de réglage en position de confort n'entraîne pas de mouvement du levier 23. Les glissières 6 restent donc verrouillées.

Le disque denté 55 comporte une patte 73 qui coopère, en position relevée arrière, avec une butée 74 en position solidaire du flasque 3b, de manière à limiter la plage de réglage de confort.

Pour faire pivoter le dossier 2 d'une position de confort vers la position rabattue intermédiaire, l'utilisateur doit actionner le levier 35. Ainsi, une traction est exercée sur l'organe de liaison 36. Cette traction fait tourner la biellette de commande d'accès aux places arrière 64 autour du pivot de came 60. Après une course morte des tétons 65 dans les découpes 66, la bielle de commande d'accès aux places arrière 64 entraîne également la biellette de commande de mise en tablette 63. Ainsi, le mouvement est transmis au pivot de came 60 et à la came 57.

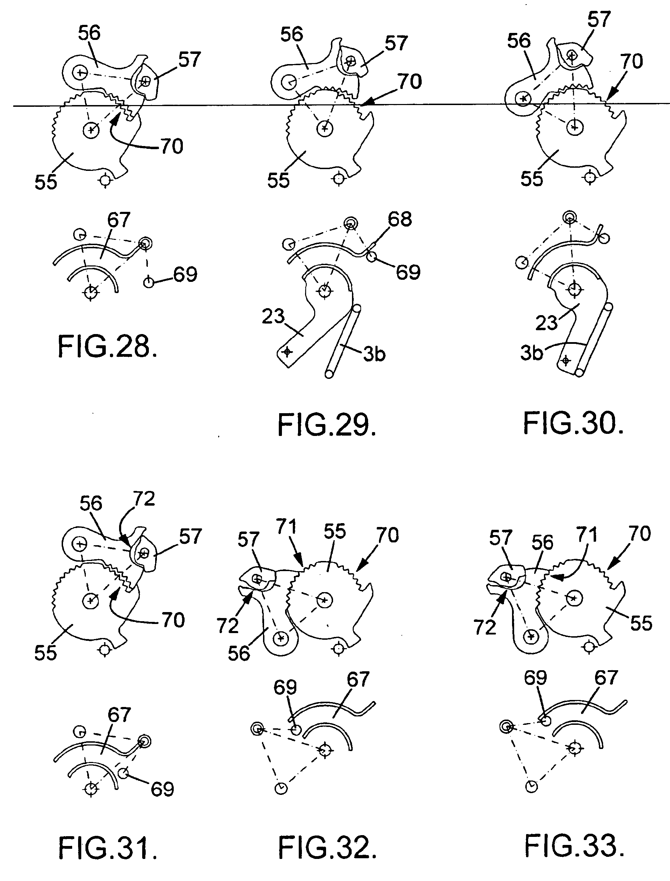

Comme illustré sur les figures 28 à 30, dans son mouvement, la came 57 interagit avec le secteur 72 du crochet de verrouillage 56 de manière à dégager celui-ci de la zone de crantage de confort 70. Le mécanisme de blocage 11 et le dossier 2 sont donc désolidarisés de l'articulation 4. L'utilisateur peut alors faire basculer le dossier 2 vers la position rabattue intermédiaire. Mais, dans le mouvement de rotation de la biellette de commande d'accès aux places arrière 64 autour du pivot de came 60, le pion d'embarquement 69 a été déplacé. La trajectoire du pion d'embarquement 69, lors du basculement du dossier 2 vers la position rabattue intermédiaire, se trouve hors du tunnel du guide 67. Le pion d'embarquement 69 coopère alors, dans la position rabattue intermédiaire du dossier 2, avec la butée 68 (figure 29).

Le pion d'embarquement 69 entraîne ainsi dans sa rotation, celle du levier 23. Celui-ci, dans son mouvement, tire sur l'organe de liaison 26 permettant ainsi le déverrouillage des glissières 6.

En position rabattue intermédiaire, le levier 23 est en butée contre le flasque 3b de l'assise 3.

On peut noter qu'en position rabattue intermédiaire, le crochet de verrouillage 56 repose sur une zone non crantée du disque denté 55 situé entre la zone de crantage de confort 70 et la zone de crantage de mise en tablette 71.

Le retour vers une position de confort s'effectue en basculant le dossier 2 vers l'arrière, sans nécessairement manipuler le levier 35, le réengagement du crochet de verrouillage 56 avec le disque denté 55, et donc la solidarisation avec l'articulation 4, ne s'effectuant que lorsque aucune dent du crochet de verrouillage 56 ne repose sur la zone non crantée du disque denté 55.

La mise en tablette du dossier 2 est illustrée par les figures 31 à 33. Pour faire basculer le dossier 2 d'une position de confort vers la position de mise en tablette, l'utilisateur actionne la manette 28. Celle-ci tend l'organe de liaison 37. Cette tension provoque la rotation de la biellette de commande de mise en tablette 63, avec le pivot de came 60 et la came 57. Par contre, grâce aux découpes 66, dans cette rotation de la biellette de commande de mise en tablette 63, la biellette de commande d'accès aux places arrière 64 n'est pas entraînée.

La came 57 interagit avec le secteur 72 du crochet de verrouillage 56 de manière à dégager les dents de ce dernier de la zone de crantage de confort 70 du disque denté 55. L'utilisateur peut alors basculer le dossier 2 vers l'avant, vers la position de mise en tablette. La biellette de commande d'accès aux places arrière 64 n'ayant pas été entraînée avec la biellette de commande de mise en tablette 63, le pion d'embarquement 69 suit une course, pendant le mouvement de bascule du dossier 2 autour de l'axe de pivotement X vers la position de mise en tablette, dans le guide 67.

En fin de course, comme représenté sur la figure 32, la manette 28 est relâchée et le crochet de verrouillage 56 coopère à nouveau avec le disque denté 55, ses dents étant engagées dans celles de la zone de crantage de mise en tablette 71.

Si, par mégarde, alors que le dossier 2 est en position de mise en tablette, l'utilisateur actionne le levier 35, le pion d'embarquement 69 reste bloqué, comme représenté sur la figure 33, dans le guide 67. La biellette de commande d'accès aux places arrière 64 ne peut donc être actionnée et le désengagement du crochet de verrouillage 56 avec le disque denté 55 ne peut être effectué que par une nouvelle manipulation de la manette 28. Ainsi, le levier 23 ne pivote pas et les glissières 6 ne sont pas déverrouillées.

## Revendications

1. Siège (1) de véhicule comportant :
- une assise (3) destinée à être reliée à un plancher (9) de véhicule par des glissières (6),
- un dossier (2) monté pivotant par rapport à l'assise (3) autour d'un axe de pivotement unique horizontal (X), entre une position de mise en tablette dans laquelle le dossier (2) s'étend sensiblement horizontalement parallèlement à l'assise (3) et une position de confort, dans laquelle le dossier (2) s'étend sensiblement verticalement et permet à un utilisateur de s'asseoir sur le siège (1), cette position de confort étant comprise dans une plage s'étendant angulairement entre une position relevée arrière et une position relevée avant du dossier,
- un mécanisme de commande de pivotement du dossier (2) par rapport à l'assise (3), adapté pour assurer les trois fonctions consistant
• commander (5) l'articulation (4) pour régler le dossier (2) dans une position de confort,
• commander un basculement du dossier (2), par rotation de celui-ci autour de l'axe de pivotement (X), vers la position de mise en tablette, et
• commander un basculement du dossier (2), par rotation de celui-ci autour de l'axe de pivotement (X), dans une position rabattue intermédiaire entre l'une des positions de réglage de confort et la position de mise en tablette,
ce mécanisme comprenant une articulation (4) actionnable entre un état déverrouillé permettant une rotation libre du dossier (2) par rapport à l'assise (3) autour de l'axe de pivotement (X) et un état verrouillé dans lequel la rotation du dossier (2) par rapport à l'assise (3) est bloquée dans une position de confort, le siège comportant en outre au moins deux organes de commande (5, 28 ou 35) séparés l'un de l'autre et agissant sur le mécanisme de commande pour activer chacun, du moins l'une des trois fonctions précitées,
- une poignée (5) formant organe de commande de l'articulation (4) commandant le passage de l'état verrouillé à l'état déverrouillé de l'articulation,
le siège étant **caractérisé par le fait que** la poignée (5) est montée rotative autour de l'axe de pivotement (X).

2. Siège selon la revendication 1, comprenant un mécanisme de blocage (11) comprenant lui-même :
- un organe rotatif (16), solidaire d'un premier élément de siège choisi parmi le dossier (2) et l'assise (3), et
- un organe de blocage (18), actionné par un organe de transmission (21) et monté mobile sur un deuxième élément de siège, choisi parmi l'assise (3) et le dossier (2), différent de celui duquel est solidaire l'organe rotatif (16), l'organe de blocage (18) étant déplaçable entre, d'une part, une position active où il vient en contact avec une première butée (17) de l'organe rotatif (16) lorsque le dossier (2) est en position rabattue intermédiaire en empêchant le dossier (2) de pivoter vers sa position de mise en tablette et, d'autre part, une position escamotée dans laquelle il n'interfère plus avec la première butée (17), l'organe de blocage (18) étant sollicité élastiquement vers sa position active.

3. Siège selon la revendication 1, comprenant un mécanisme de blocage (11) comprenant lui-même :
- un organe rotatif (16), solidaire d'un premier élément de siège choisi parmi le dossier (2) et l'assise (3), et
- un organe de blocage (18), monté mobile sur un deuxième élément de siège, choisi parmi l'assise (3) et le dossier (2), différent de celui duquel est solidaire l'organe rotatif (16), l'organe de blocage (18) étant déplaçable entre, d'une part, une position active où il vient en contact avec une première butée (17) de l'organe rotatif (16) lorsque le dossier (2) est en position rabattue intermédiaire en empêchant le dossier (2) de pivoter vers sa position de mise en tablette et, d'autre part, une position escamotée dans laquelle il n'interfère plus avec la première butée (17), l'organe de blocage (18) étant sollicité élastiquement vers sa position escamotée.

4. Siège selon l'une des revendications 2 et 3, dans lequel l'organe de blocage (18) est adapté pour venir en prise avec l'organe rotatif (16) en immobilisant le dossier (2), par rapport à l'assise (3), lorsque le dossier (2) est dans sa position de mise en tablette.

5. Siège selon l'une des revendications 2 à 4, dans lequel l'organe rotatif (16) comporte une surface de came (22) adaptée pour actionner un levier (23), lui-même adapté pour verrouiller ou déverrouiller les glissières (6), et qui est monté mobile sur le dossier entre une position active, dans laquelle le levier. (23) provoque un déverrouillage des glissières (6), et une position passive dans laquelle le levier (23) permet un verrouillage des glissières (6).

6. Siège selon la revendication 5, dans lequel le levier (23) est sollicité élastiquement vers sa position passive et la surface de came (22) est adaptée pour déplacer le levier (23) dans sa position active lorsque le dossier (2) est dans sa position rabattue intermédiaire.

7. Siège selon la revendication 5, dans lequel le levier (23) est sollicité élastiquement vers sa position active et la surface de came (22) est adaptée pour déplacer le levier (23) dans sa position passive lorsque le dossier (2) est dans une position de réglage de confort ou dans sa position de mise en tablette.

8. Siège selon l'une des revendications 6 et 7, dans lequel le levier (23) est apte à maintenir l'organe de blocage (1.8) dans sa position active, lorsque le dossier (2) est dans sa position rabattue intermédiaire.

9. Siège selon la revendication 1 comportant un mécanisme de blocage (11) solidaire du dossier (2) dans son pivotement autour de l'axe de pivotement (X).

10. Siège selon la revendication 9, comportant un organe de blocage (18) et un levier (23), tous deux montés pivotants sur le dossier (2), l'organe de blocage (18) étant commandé par l'intermédiaire de l'organe de commande (35) activant le basculement du dossier (2) en position rabattue intermédiaire, entre une position escamotée, dans laquelle il n'interagit pas avec le levier (23), et une position active, dans laquelle il entraîne la rotation du levier (23) avec le dossier (2), lorsque celui-ci pivote autour de l'axe de pivotement (X), d'une position de confort vers la position rabattue intermédiaire.

11. Siège selon la revendication 10, dans lequel le levier (23), lorsqu'il est entraîné par l'organe de blocage (18) dans le pivotement du dossier (2) d'une position de confort vers la position rabattue intermédiaire, commande le déverrouillage des glissières (6).

12. Siège selon l'une des revendications 10 et 11, dans lequel le levier (23) bloque la rotation du dossier (2) en position rabattue intermédiaire, lorsqu'il pivote vers la position de mise en tablette, en prenant appui sur un élément solidaire de l'assise (38).

13. Siège selon l'une des revendications 10 à 12, dans lequel l'organe de blocage (18) est rappelé, grâce à des premiers moyens élastiques (52), vers une position escamotée dans laquelle il n'interagit pas avec le levier (23) et le levier (23) est rappelé, grâce à des seconds moyens élastiques (54) indépendants des premiers moyens élastiques (52), vers une position passive dans laquelle il n'interagit pas avec l'organe de blocage (18) et autorise le verrouillage des glissières (6).

14. Siège selon la revendication 9, dans lequel le mécanisme de blocage (11) comporte un levier (23) monté pivotant sur le dossier (2) adapté pour commander le verrouillage et le déverrouillage des glissières (6).

15. Siège selon la revendication 14, dans lequel le levier (23) comporte des moyens de guidage (64, 67, 69) adaptés pour que le levier (23) soit entraîné, vers sa position active dans laquelle il provoque le déverrouillage des glissières (6), dans la rotation du dossier (2) d'une position de confort vers la position rabattue intermédiaire et pour empêcher le déverrouillage des glissières (6) lorsque que le dossier (2) est en position de mise en tablette.

16. Siège selon l'une des revendications précédentes, dans lequel l'organe de commande (28) activant le basculement du dossier (2) vers la position de mise en tablette et l'organe de commande (35) activant le basculement du dossier (2) dans la position rabattue intermédiaire sont séparés l'un de l'autre.

17. Siège selon l'une des revendications précédentes, dans lequel l'organe de commande (35) activant le basculement du dossier (2) vers la position rabattue intermédiaire, est monté sur un emplacement choisi parmi l'articulation (4) et le haut du dossier (2).

18. Siège selon l'une des revendications précédentes, dans lequel l'un des organes de commande (28,35) est apte à actionner un mécanisme de blocage (11) situé de l'autre côté du siège (1) par rapport à l'articulation (4).

19. Siège selon l'une des revendications précédentes, dans lequel l'organe de commande (28) activant le basculement du dossier vers la position de mise en tablette et l'organe de commande (5) contrôlant l'articulation (4) sont confondus.

## Claims

1. Vehicle seat (1) comprising:
- a cushion (3) intended to be connected to a floor (9) of the vehicle by slide rails (6),
- a backrest (2) mounted to pivot with respect to the cushion (3) about a single horizontal pivot axis (X) between a folded-flat position in which the backrest (2) runs roughly horizontally parallel to the cushion (3) and a comfort position in which the backrest (2) extends roughly vertically and allows its user to sit in the seat (1), this comfort position lying in a range extending angularly between a rear erect position and a forward erect position of the backrest,
- a mechanism for controlling the pivoting of the backrest (2) with respect to the cushion (3), and which is designed to perform the three functions consisting in:
• commanding (5) the articulation (4) to adjust the backrest (2) into a comfort position,
• commanding a tilting of the backrest (2) by rotating it about the pivot axis (X) towards the folded-flat position, and
• commanding a tilting of the backrest (2) by rotating it about the pivot axis (X) into an intermediate folded-down position between one of the adjusted comfort positions and the folded-flat position,
this mechanism comprising an articulation (4) that can be actuated between an unlocked state that allows the backrest (2) to rotate freely with respect to the cushion (3) about the pivot axis (X) and a locked state in which the rotation of the backrest (2) with respect to the cushion (3) is blocked in a comfort position, the seat comprising at least two control members (5, 28 or 35) separate from one another and acting on the control mechanism so as each to activate at least one of the three aforementioned functions,
- a handle (5) forming a control member of the articulation (4) commanding actuation of the articulation from the locked state to the unlocked state, the seat being **characterized in that** the handle (5) is mounted to rotate around the pivot axis (X).

2. Seat according to Claim 1, comprising a blocking mechanism (11) itself comprising:
- a rotary member (16), secured to a first seat element chosen from the backrest (2) and the cushion (3), and
- a blocking member (18), actuated by a transmission member (21) and mounted to move on a second seat element, chosen from the cushion (3) and the backrest (2), different from the one to which the rotary member (16) is secured, the blocking member (18) being movable between, on the one hand, an active position in which it comes into contact with a first stop (17) of the rotary member (16) when the backrest (2) is in the intermediate folded-down position, preventing the backrest (2) from pivoting towards its folded-flat position and, on the other hand, a retracted position in which it no longer interferes with the first stop (17), the blocking member (18) being urged elastically towards its active position.

3. Seat according to Claim 1, comprising a blocking mechanism (11) itself comprising:
- a rotary member (16), secured to a first seat element chosen from the backrest (2) and the cushion (3), and
- a blocking member (18), mounted to move on a second seat element, chosen from the cushion (3) and the backrest (2), different from the one to which the rotary member (16) is secured, the blocking member (18) being movable between, on the one hand, an active position in which it comes into contact with a first stop (17) of the rotary member (16) when the backrest (2) is in the intermediate folded-down position, preventing the backrest (2) from pivoting towards its folded-flat position and, on the other hand, a retracted position in which it no longer interferes with the first stop (17), the blocking member (18) being urged elastically towards its retracted position.

4. Seat according to either of Claims 2 and 3, in which the blocking member (18) is designed to engage with the rotary member (16), immobilizing the backrest (2) with respect to the cushion (3) when the backrest (2) is in its folded-flat position.

5. Seat according to one of Claims 2 to 4, in which the rotary member (16) comprises a cam surface (22) designed to actuate a lever (23), itself designed to lock or unlock the slide rails (6), and which is mounted to move on the backrest between an active position in which the lever (23) unlocks the slide rails (6), and a passive position in which the lever (23) allows the slide rails (6) to be locked.

6. Seat according to Claim 5, in which the lever (23) is urged elastically towards its passive position and the cam surface (22) is designed to move the lever (23) into its active position when the backrest (2) is in its intermediate folded-down position.

7. Seat according to Claim 5, in which the lever (23) is urged elastically towards its active position and the cam surface (22) is designed to move the lever (23) into its passive position when the backrest (2) is in an adjusted comfort position or in its folded-flat position.

8. Seat according to either of Claims 6 and 7, in which the lever (23) is able to hold the blocking member (18) in its active position, when the backrest (2) is in its intermediate folded-down position.

9. Seat according to Claim 1 comprising a blocking mechanism (11) which pivots as one with the backrest (2) in its pivoting about the pivot axis (X).

10. Seat according to Claim 9, comprising a blocking member (18) and a lever (23), both mounted to pivot on the backrest (2), the blocking member (18) being controlled via the control member (35) activating the tipping of the backrest (2) in the intermediate folded-down position, between a retracted position, in which it does not interact with the lever (23) and an active position in which it causes the lever (23), to rotate with the backrest (2) when the latter pivots about the pivot axis (X) from a comfort position to the intermediate folded-down position.

11. Seat according to Claim 10, in which the lever (23), when driven by the blocking member (18) in the pivoting of the backrest (2) from a comfort position to the intermediate folded-down position, commands the unlocking of the slide rails (6).

12. Seat according to either of Claims 10 and 11, in which the lever (23) blocks the rotation of the backrest (2) in the intermediate folded-down position when it pivots towards the folded-flat position, resting against an element secured to the cushion (38).

13. Seat according to one of Claims 10 to 12, in which the blocking member (18) is returned, by first elastic means (52), towards a retracted position in which it does not interact with the lever (23) and the lever (23) is returned, by second elastic means (54) independent of the first elastic means (52), to a passive position in which it does interact with the blocking member (18) and allows the slide rails (6) to be locked.

14. Seat according to Claim 9, in which the blocking mechanism (11) comprises a lever (23) mounted to pivot on the backrest (2) designed to command the locking and unlocking of the slide rails (6).

15. Seat according to Claim 14, in which the lever (23) comprises guide means (64, 67, 69) designed so that the lever (23) is driven, towards its active position in which it causes the unlocking of the slide rails (6), in the rotation of the backrest (2) from a comfort position towards the intermediate folded-down position so as to prevent the unlocking of the slide rails (6) when the backrest (2) is in the folded-flat position.

16. Seat according to any one of the preceding claims, in which the control member (28) activating the tipping of the backrest (2) towards the folded-flat position and the control member (35) activating the tipping of the backrest (2) in the intermediate folded-down position are separate from one another.

17. Seat according to one of the preceding claims, in which the control member (35) activating the tipping of the backrest (2) towards the intermediate folded-down position is mounted on a location chosen between the articulation (4) and the top of the backrest (2).

18. Seat according to one of the preceding claims, in which one of the control members (28, 35) is able to actuate a blocking mechanism (11) situated on the other side of the seat (1) to the articulation (4).

19. Seat according to one of the preceding claims, in which the control member (28) activating the tipping of the backrest towards the folded-flat position and the control member (5) controlling the articulation (4) are coincident.

## Patentansprüche

1. Fahrzeugsitz (1) umfassend:
- eine Sitzeinheit (3), dazu bestimmt mittels Gleitschienen (6) mit einem Fahrzeugboden (9) verbunden zu sein,
- eine Rückenlehne (2), bezüglich der Sitzeinheit (3) um eine horizontale Schwenkachse (X) schwenkbar angeordnet, zwischen einer Ablagestellung, in der sich die Rückenlehne (2) im Wesentlichen parallel zur Sitzeinheit (3) erstreckt und einer Komfortstellung, in der sich die Rückenlehne (2) im Wesentlichen senkrecht zur Sitzeinheit (3) erstreckt und es einem Benutzer erlaubt sich auf den Sitz (1) zu setzen, wobei die Komfortstellung in einem Winkelbereich enthalten ist, sich erstreckend zwischen einer hinteren aufgestellten Stellung und einer vorderen aufgestellten Stellung der Rückenlehne erstreckt,
- ein Steuerungsmechanismus für das Schwenkens der Rückenlehne (2) bezüglich der Sitzeinheit (3), geeignet die drei Funktionen zu gewährleisen, bestehend aus:
■ Steuern (5) eines Gelenkes (4) die Rückenlehne (2) in einer Komfortstellung zu steuern,
■ Steuern eines Umklappens der Rückenlehne (2), durch Rotation dieser um die Schwenkachse (X), hin zu der Ablagestellung, und
■ Steuern eines Umklappens der Rückenlehne (2), durch Rotation dieser um die Schwenkachse (X), in einer heruntergeklappten Zwischenstellung zwischen einer der gesteuerten Komfortstellungen und der Ablagestellung,
wobei der Steuerungsmechanismus das Gelenk (4) umfasst, welches zwischen einem entriegeltem Zustand, der eine freie Rotation der Rückenlehne (2) bezüglich der Sitzeinheit (3) um die Schwenkachse (X) erlaubt, und einem verriegeltem Zustand, indem die Rotation der Rückenlehne (2) bezüglich der Sitzeinheit (3) in einer Komfortstellung blockiert ist, betätigbar ist,
wobei der Sitz zudem zumindest zwei Steuerungseinrichtungen (5, 28 oder 35) aufweist, welche voneinander separiert sind und die auf den Steuerungsmechanismus wirken um jeweils zumindest eine der drei oben beschriebenen Funktionen zu aktivieren,
einen Griff (5), der ein Steuerelement des Gelenkes (4) zum Übergang vom verriegelten Zustand hin zum entriegelten Zustand des Gelenkes bildet,
wobei der Sitz **dadurch gekennzeichnet ist, dass** der Griff (5) um die Schwenkachse (X) drehbar ist.

2. Sitz gemäß Anspruch 1, einen Blockiermechanismus (11) umfassend, welcher umfasst:
- eine Rotationeinrichtung (16), festgesetzt an einem Element des Sitzes, ausgewählt aus der Rückenlehne (2) und der Sitzeinheit (3), und
- eine Blockiereinrichtung (18), von einer Übertragungseinrichtung (21) betätigt und beweglich an einem zweiten Element des Sitzes, ausgewählt aus der Rückenlehne (2) und der Sitzeinheit (3) und verschieden zu demjenigen, an dem die Rotationseinrichtung (16) festgesetzt ist, wobei die Blockiereinrichtung (18) versetzbar ist zwischen einer aktiven Stellung einerseits, in der sie in Kontakt mit einem ersten Anschlag (17) der Rotationsreinrichtung (16) kommt, wenn die Rückenlehne (2) in einer aufgestellten Zwischenstellung ist, dabei ein Schwenken der Rückenlehne (2) hin zu der Ablagestellung verhindernd, und einer eingezogenen Stellung andererseits, in der sie nicht mehr mit dem ersten Anschlag (17) wechselwirkt, wobei die Blockiereinrichtung (18) zu ihrer aktiven Stellung hin elastisch beaufschlagt ist.

3. Sitz gemäß Anspruch 1, einen Blockiermechanismus (11) umfassend, welcher umfasst:
- eine Rotationseinrichtung (16), festgesetzt an einem Element des Sitzes, ausgewählt aus der Rückenlehne (2) und der Sitzeinheit (3), und
- eine Blockiereinrichtung (18), beweglich an einem zweiten Element des Sitzes, ausgewählt aus der Rückenlehne (2) und der Sitzeinheit (3) und verschieden zu demjenigen, an dem die Rotationseinrichtung (16) festgesetzt ist, wobei die Blockiereinrichtung (18) versetzbar ist zwischen einer aktiven Stellung einerseits, in der sie in Kontakt mit einem ersten Anschlag (17) der Rotationsreinrichtung (16) kommt, wenn die Rückenlehne (2) in einer aufgestellten Zwischenstellung ist, dabei ein Schwenken der Rückenlehne (2) hin zu der Ablagestellung verhindernd, und einer eingezogenen Stellung andererseits, in der sie nicht mehr mit dem ersten Anschlag (17) wechselwirkt, wobei die Blockiereinrichtung (18) zu ihrer aktiven Stellung hin elastisch beaufschlagt ist.

4. Sitz gemäß einem der Ansprüche 2 oder 3, wobei die Blockiereinrichtung (18) so ausgebildet ist, dass sie mit der Rotationseinrichtung (16) in Eingriff kommt, die Rückenlehne (2) bezüglich der Sitzeinheit (3) festsetzend, wenn die die Rückenlehne in ihrer Ablagestellung ist.

5. Sitz gemäß einem der Ansprüche 2 bis 4, wobei die Rotationseinrichtung (16) eine Nockenfläche (22) aufweist, dazu ausgelegt einen Hebel (23) zu betätigen, welcher dazu ausgelegt ist, die Gleitschienen (6) zur verriegeln oder zu entriegeln und welcher an der Rückenlehne (2) beweglich angebracht ist, zwischen einer aktiven Stellung, in der der Hebel (23) eine Entriegelung der Gleitschienen (6) bewirkt, und einer passiven Stellung, in der der Hebel (23) die Verriegelung der Gleitschienen (6) erlaubt.

6. Sitz gemäß Anspruch 5, wobei der Hebel (23) elastisch zu seiner passiven Stellung hin beaufschlagt ist und die Nockenfläche (22) so ausgelegt ist, dass sie den Hebel (23) in seine aktive Stellung versetzt, wenn die Rückenlehne (2) in ihrer aufgestellten Zwischenstellung ist.

7. Sitz gemäß Anspruch 5, wobei der Hebel (23) elastisch zu seiner aktiven Stellung hin beaufschlagt ist und die Nockenfläche (22) so ausgelegt ist, dass sieden Hebel (23) in seine passive Stellung versetzt, wenn die Rückenlehne (2) in einer Stellung der Komforteinstellung oder in ihrer Ablagestellung ist.

8. Sitz gemäß einem der Ansprüche 6 oder 7, wobei der Hebel (23) dazu geeignet ist, die Blockiereinrichtung (18) in ihrer aktiven Position zu halten, wenn die Rückenlehne (2) in ihrer aufgestellten Zwischenstellung ist.

9. Sitz gemäß Anspruch 1, umfassend einen Blockiermechanismus (11), der in seinem Schwenken um die Schwenkachse (X) an der Rückenlehne (2) festgesetzt ist.

10. Sitz gemäß Anspruch 9, umfassend eine Blockiereinrichtung (18) und einen Hebel (23), beide schwenkbar and der Rückenlehne (2) angebracht, wobei die Blockiereinrichtung mittels der Steuerungseinrichtung (35) gesteuert wird, welche das Umklappen der Rückenlehne (2) in aufgestellter Zwischenstellung aktiviert, zwischen einer eingezogenen Stellung in der sie nicht mit dem Hebel (23) interagiert, und einer aktiven Stellung, in der sie die Drehung des Hebels mit der Rückenlehne veranlasst, wenn diese um die Schwenkachse (X) von einer Komfortstellung in die aufgestellte Zwischenstellung schwenkt.

11. Sitz gemäß Anspruch 10, wobei der Hebel (23), wenn er von der Blockiereinrichtung (18) beim Schwenken der Rückenlehne (2) von einer Komfortstellung in die aufgestellte Zwischenstellung veranlasst wird, die Entriegelung der Gleitschienen (6) steuert.

12. Sitz gemäß einem der Ansprüche 10 oder 11, wobei der Hebel (23) die Drehung der Rückenlehne (2) in aufgeklappter Zwischenstellung blockiert, wenn sie zu der Ablagestellung hin schwenkt, in Anlage kommend mit einem an der Sitzeinheit festgesetzten Element (38).

13. Sitz gemäß einem der Ansprüche 10 bis 12, wobei die Blockiereinrichtung (18), mittels erster elastischer Mittel (52) in einer eingezogenen Stellung zurückgehalten ist, in welcher sie nicht mit dem Hebel (23) interagiert und der Hebel (23) mittels von den ersten elastischen Mitteln (52) zweiter unabhängiger elastischer Mittel (54) in einer passiven Stellung zurückgehalten wird, in der er nicht mit der Blockiereinrichtung (18) interagiert und die Verriegelung der Gleitschienen (6) erlaubt.

14. Sitz gemäß Anspruch 9, wobei der Blockiermechanismus (11) einen Hebel (23) umfasst, schwenkbar an der Rückenlehne (2) angebracht und so ausgelegt, dass er die Verriegelung und die Entriegelung der Gleitschienen (6) steuert.

15. Sitz gemäß Anspruch 14, wobei der Hebel (23) Führungsmittel (64, 67, 69) aufweist, dazu ausgelegt, dass der Hebel (23) hin zu seiner aktiven Stellung beaufschlagt ist, in der er die Entriegelung der Gleitschienen (6) bewirkt, bei der Drehung der Rückenlehne (2) aus einer Komfortstellung zu der aufgestellten Zwischenstellung, und um die Entriegelung der Gleitschienen (6) zu verhindern, wenn die Rückenlehne (2) in Ablagestellung ist.

16. Sitz gemäß einem der vorangehenden Ansprüche, wobei die Steuerungseinrichtung (28), welche das Umklappen der Rückenlehne (2) hin zu der Ablagestellung aktiviert und die Steuerungseinrichtung (35), welche das Umklappen der Rückenlehne (2) hin zu der aufgestellten Zwischenstellung hin aktiviert, voneinander getrennt sind.

17. Sitz gemäß einem der vorangehenden Ansprüche, wobei die Steuerungseinrichtung (35), welche das Umklappen der Rückenlehne (2) hin zu der aufgestellten Zwischenstellung hin aktiviert, an einer Stelle, ausgewählt aus dem Gelenk (4) dem oberen Abschnitt der Rückenlehne (2), angebracht ist.

18. Sitz gemäß einem der vorangehenden Ansprüche, wobei eine der Steuerungseinrichtungen (28, 35) dazu geeignet ist, dass sie den Blockiermechanismus (11) betätigt, welcher an der anderen Seite des Sitze (1) bezüglich des Gelenkes (4) befindlich ist.

19. Sitz gemäß einem der vorangehenden Ansprüche, wobei die Steuerungseinrichtung (28), welche das Umklappen der Rückenlehne (2) hin zu der Ablagestellung aktiviert, und die Steuerungseinrichtung (5), welche das Gelenk kontrolliert zusammengeführt sind.
